# EUROPEAN PATENT SPECIFICATION

(11) **EP 2 607 063 B1**
(45) Date of publication and mention of the grant of the patent: **27.04.2016**
(21) Application number: 12197566.8
(22) Date of filing: 17.12.2012
(51) Int. Cl.: B29D 30/00, B60C 23/00, B60C 23/12

(54) **Method of providing an air passage in a tire and coated filament**
Verfahren zur Bereitstellung eines Luftdurchgangs in einem Reifen und beschichteter Faden
Procédé de fourniture d'un passage d'air dans un pneu et filament enduit

(30) Priority: 21.12.2011 US 201161578591 P; 05.11.2012 US 201213668809
(43) Date of publication of application: 26.06.2013
(73) Proprietor: The Goodyear Tire & Rubber Company, Akron, OH 44316-0001 (US)
(72) Inventor: Sportelli, Francesco, L-3249 Bettembourg (LU); Jacobs, Gaston, L-7723 Welsdorf (LU); Besnoin, Etienne, L-1539 Luxembourg (LU)
(74) Representative: Kutsch, Bernd

(56) References cited:
- EP-A1- 2 384 912
- EP-A2- 2 343 200
- WO-A1-2005/012009
- WO-A1-2007/134556
- US-A- 4 045 592
- US-B1- 6 495 760

## Description

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is a desirable, therefore, to incorporate an air maintenance feature within a tire that will re-inflate the tire in order to compensate for any reduction in tire pressure over time without the need for driver intervention.

WO-A-2005/012009, EP-A-2 343 200, WO-A-2007/134556 and EP-A-2 384 912 describe methods of providing a passageway in a tire.

US-A-4,045,592 describes a coated filament in accordance with the preamble of claim 12.

A further coated filament is described in US-A-6,495,760.

### Summary of the Invention

The invention relates to a method of providing a passageway in a tire in accordance with claim 1 and to a coated filament in accordance with claim 12.

Dependent claims refer to preferred embodiments of the invention.

In one aspect of the invention, the method in accordance with the invention may be a method of constructing a tire, the method comprising: constructing a coated filament, the coated filament constructed by coating a filament with a coating material, the coating material comprising at least one diene based elastomer and heat expandable thermoplastic resin particles containing therein a liquid or solid capable of generating a gas upon vaporization, decomposition, or a chemical reaction under heating; encasing the coated filament into containment within an uncured or pre-cured flexible tire component; building a green tire from tire components including the uncured or pre-cured flexible tire component and the encased coated filament; curing the green tire including the flexible tire component containing the coated filament; removing the filament from the cured flexible tire component to leave within the flexible tire component a substantially unobstructed air passageway.

In one aspect of the invention, the flexible tire component may be an uncured flexible tire component.

In another aspect of the invention, the flexible tire component may be a pre-cured flexible tire component.

The flexible tire component may be a tire sidewall component, a tire tread component, a tire chafer component, or a tire apex component.

In one aspect of the invention, the coated filament may extend between an air inlet and an air outlet cavity in the uncured or pre-cured flexible tire component.

In one aspect of the invention, the method may further comprise removing the filament axially from the cured flexible tire component by means of drawing a free end of the filament.

In one aspect of the invention, the method may further comprise inserting a temporary air inlet assembly into an air inlet cavity prior to curing the green tire; and inserting a temporary air outlet assembly into an air outlet cavity prior to curing the green tire; and removing the temporary air inlet assembly and the temporary air outlet assembly after curing the green tire.

In one aspect of the invention, the temporary air inlet assembly may be a procured temporary air inlet assembly and the temporary air outlet assembly may be a procured temporary air outlet assembly.

In one aspect of the invention, the method may include extending the air outlet assembly through a tire sidewall into communication with a tire cavity.

In one aspect of the invention, the method may include extending the air outlet assembly through a tire sidewall into air flow communication between the unobstructed air passageway and a tire cavity.

In one aspect of the invention, the method may include encasing the coated filament into a containment with the uncured or pre-cured flexible tire component by: forming a channel into the uncured or pre-cured flexible tire component defined by channel sidewalls and a channel bottom wall; inserting the coated filament into the channel; and collapsing a flexible channel sidewall over the coated filament.

In one aspect of the invention, the forming a channel into the uncured or pre-cured flexible tire component may be by extruding the uncured flexible tire component with the channel formed therein.

In another preferred aspect of the invention, a coated filament comprising a filament and a coating material coating the filament is disclosed. The coating material comprises at least one diene based elastomer and heat expandable thermoplastic resin particles containing therein a liquid or a solid capable of generating a gas upon vaporization, decomposition, or a chemical reaction under heating.

In one aspect of the invention, the filament may be a polyamide filament, a polyester filament, or a poly(vinyl alcohol) filament.

In one aspect of the invention, the thermoplastic resin particles may be (meth)acrylonitrile polymer particles or copolymer particles preferably having a high content of (meth)acrylonitrile.

In one aspect of the invention, the liquid or solid capable of generating a gas upon vaporization, decomposition, or a chemical reaction under heating may be a hydrocarbon such as n-pentane, isopentane, neopentane, butane, isobutane, hexane, and petroleum ether; a chlorinated hydrocarbon such as methyl chloride, methylene chloride, dichloroethylene, trichloroethane, and trichloroethylene; or azodicarbonamide, dinitrosopentamethylene-tetramine, azobisisobutyronitrile, a toluenesulfonyl hydrazide derivative, or aromatic succinyl hydrazide.

### Definitions

"Axial" and "axially" means lines or directions that are parallel to the axis of rotation of the tire.

"Chafer" is a strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Footprint" means the contact patch or area of contact of the tire tread with a flat surface at zero speed and under normal load and pressure.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
FIG. 1 is a detail view of the filament die.
FIG. 2 is a perspective view of a basic filament extruder and conveyor.
FIG. 3 is a detail of a chafer die.
FIG. 4 is a perspective view of a basic chafer strip extruder and conveyor.
FIG. 5 is a dimensioned sectioned view of the filament.
FIG. 6 is a dimensioned sectioned view of extruded chafer strip.
FIGS. 7A through 7C are detailed views showing the filament being coated with a rubber composition according to the present invention.
FIG. 8 is a detail view of the chafer strip with punched hole locations.
FIG. 9 is an enlarged perspective view of the coated filament being assembled into the chafer strip.
FIGS. 10A through 10C are sectioned views showing the coated filament and the chafer strip assembly.
FIG. 11A is a perspective view of a tire build up drum with assembled 180 degree filament/chafer strip being applied, with a normal chafer strip placement on opposite ends.
FIG. 11B is a perspective view of a tire build up drum with a normal 180 degree chafer strip being placed abutting the 180 degree filament/chafer strip.
FIG. 12 is a perspective front view of a formed green tire showing inlet and outlet locations with the coated filament extending from openings and the tire ready for core forming devices.
FIG. 13A is an enlarged sectioned view showing the inlet cavity and the coated filament ready for placement of the inlet core device.
FIG. 13B is an enlarged sectioned view showing the outlet cavity and the coated filament ready for placement of the outlet core device.
FIG. 14A is a top perspective view showing a first embodiment outlet core assembly with screw punch attached.
FIG. 14B is a bottom perspective view showing the outlet core assembly with screw punch removed and the nut attached.
FIG. 14C is a top exploded view of the outlet core assembly showing top/bottom core halves and mounting screw with the screw punch and hold down nut.
FIG. 14D is a bottom exploded view of FIG. 14C.
FIG. 15A is a top perspective view of a first embodiment inlet core assembly.
FIG. 15B is a top exploded view of the inlet core assembly showing top/bottom core halves and magnetic inserts.
FIG. 15C is a bottom exploded view of FIG. 15B.
FIG. 16A is a threaded elbow and valve housing assembly.
FIG. 16B is an exploded view of FIG. 16A showing the elbow, valve housing and Lee valve.
FIG. 17A shows an alternative embodiment of threaded elbow and one-way valve assembly.
FIG. 17B is an exploded view of FIG. 17A showing the elbow valve housing with air passage ways and membrane cover.
FIG. 18A is an enlarged sectioned view showing the inlet bottom core being inserted into the cavity under the coated filament and the chafer groove re-opened to allow room of the conical end of the inlet core to be fully seated into cavity.
FIG. 18B is an enlarged sectioned view showing the inlet bottom core fully inserted into the cavity and the coated filament being trimmed to length.
FIG. 18C is an enlarged sectioned view showing the inlet top core ready for placement into the cavity.
FIG. 18D is an enlarged section view showing the inlet core assembly fully assembled into cavity.
FIG. 18E is an enlarged section view showing the inlet core assembly held in place with thin rubber patches is ready for curing.
FIG. 19A is an enlarged sectioned view showing the outlet bottom core unit being inserted into the cavity under the coated filament and the punch forced through the tire wall into the cavity chamber with the chafer groove re-opened to allow room for the conical end of the outlet core bottom unit to be fully seated into cavity.
FIG. 19B is an enlarged sectioned view of the bottom outlet core unit fully seated into the cavity.
FIG. 19C is an enlarged sectioned view from cavity side showing the screw punch fully inserted through the tire wall.
FIG. 19D is an enlarged sectioned view of the screw punch removed from the outlet bottom core half component with the nut attached to thread shaft.
FIG. 19E is an enlarged sectioned view showing the nut fully attached to the outlet bottom core shaft.
FIG. 19F is an enlarged sectioned view of the coated filament cut to length at the outlet bottom core strip cavity.
FIG. 19G is an enlarged sectioned view of the outlet top core component placed into the cavity and screwed into place.
FIG. 19H is an enlarged sectioned view showing the outlet core halves and screw fully assembled.
FIG. 19I is an enlarged sectioned view showing the conical end of outlet core assembly covered with a rubber patch.
FIG. 20 is a side view of a tire showing the inlet and outlet core locations before curing.
FIG. 21A is a section view taken from FIG. 20 showing the inlet core location.
FIG. 21B is an enlarged view of the inlet core taken from FIG. 21A.
FIG. 22A is a section view taken from FIG. 20 showing the outlet core.
FIG. 22B is an enlarged view of the outlet core taken from FIG. 22A.
FIG. 23 is an enlarged sectioned view showing the inlet core halves being removed after curing.
FIG. 24 is an enlarged sectioned view showing the nut removed from the outlet core threaded shaft.
FIG. 25 is an exploded view of the outlet core halves disassembled and removed from the sidewall cavity.
FIG. 26 is a side elevation showing the coated filament removed from the tire sidewall.

### Detailed Description of Example Embodiments of the Invention

As an embodiment of the invention, there is disclosed a method of constructing a tire, comprising:
constructing a coated filament, the coated filament constructed by coating a filament with a coating material, the coating material comprising at least one diene based elastomer and heat expandable thermoplastic resin particles containing therein a liquid or solid capable of generating a gas upon vaporization, decomposition, or a chemical reaction under heating;
encasing the coated filament into containment within an uncured or pre-cured flexible tire component;
building a green tire from tire components including the uncured or pre-cured flexible tire component and the encased coated filament;
curing the green tire including the flexible tire component containing the coated filament;
removing the filament from the cured flexible tire component to leave within the flexible tire component a substantially unobstructed air passageway.

In one embodiment, the coated filament extends between an air inlet and an air outlet cavity in the uncured or pre-cured flexible tire component.

In one embodiment, the method further comprises removing the filament axially from the cured flexible tire component by means of drawing a free end of the filament.

In one embodiment, the method further comprises inserting a temporary air inlet assembly into an air inlet cavity prior to curing the green tire; and inserting a temporary air outlet assembly into an air outlet cavity prior to curing the green tire; and removing the temporary air inlet assembly and the temporary air outlet assembly after curing the green tire.

In one embodiment, the temporary air inlet assembly is a procured temporary air inlet assembly and wherein the temporary air outlet assembly is a procured temporary air outlet assembly.

In one embodiment, the method further comprises extending the air outlet assembly through a tire sidewall into communication with a tire cavity.

In one embodiment, the method further comprises extending the air outlet assembly through a tire sidewall into air flow communication between the unobstructed air passageway and a tire cavity.

In one embodiment, the method further comprises encasing the coated filament into a containment with the uncured or pre-cured flexible tire component by:
forming a channel into the uncured or pre-cured flexible tire component defined by channel sidewalls and a channel bottom wall;
inserting the coated filament into the channel; and
collapsing a flexible channel sidewall over the coated filament.

In one embodiment, forming a channel into the uncured or pre-cured flexible tire component is by extruding the uncured flexible tire component with the channel formed therein.

There is further disclosed a coated filament comprising a filament and a coating material coating the filament, the coating material comprising at least one diene based elastomer and heat expandable thermoplastic resin particles containing therein a liquid or a solid capable of generating a gas upon vaporization, decomposition, or a chemical reaction under heating.

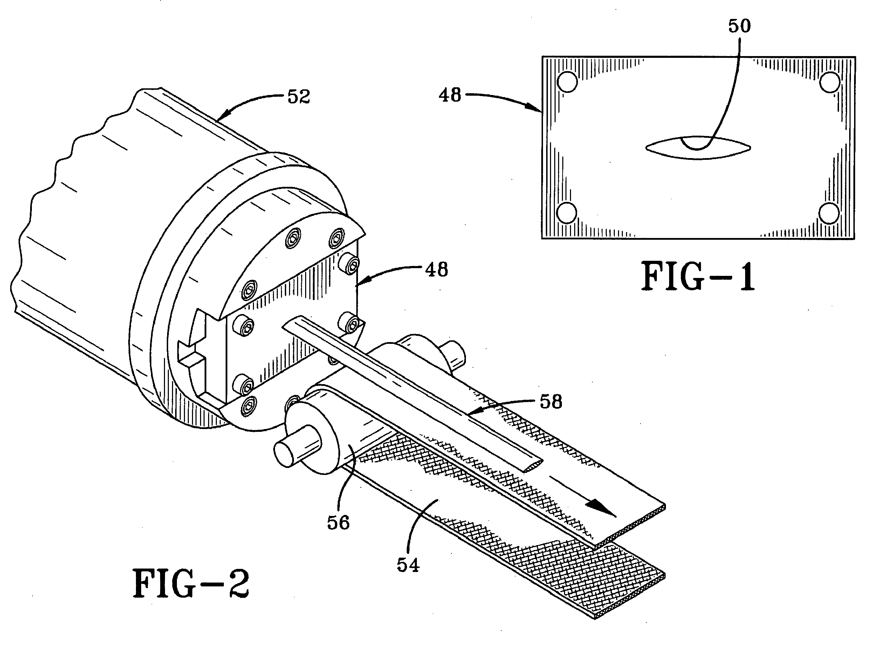

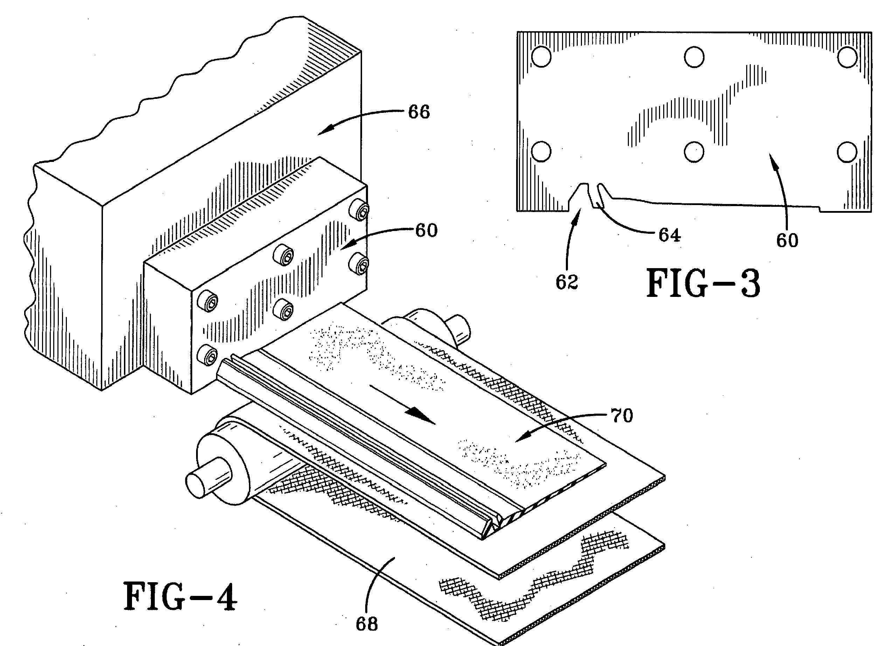

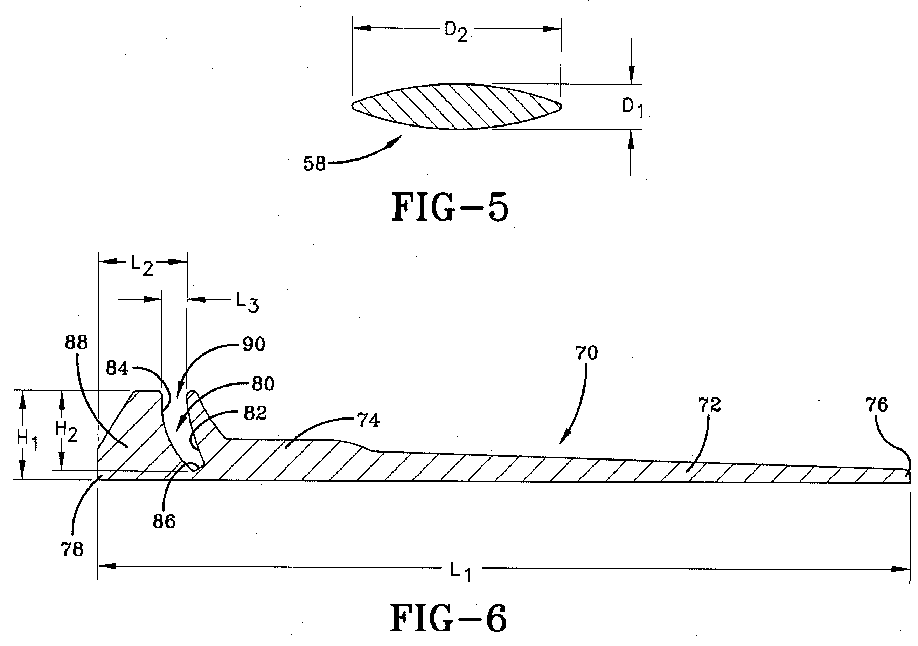

With reference to FIGS. 1, 2, 3, 4, 5 and 6, a polymer filament 58 is formed by means of die 48 having a profiled orifice 50 therethrough. The orifice is elongate and generally lens shaped in section with the extruded strip 58 of like sectional geometry. The lens shape may have a dimension of, by way of example, 2.7 mm length D2 x 0.5 mm at D1. While the preferred composition of the strip 58 is a polymer, other materials such as cable may be used if desired. The die 48 is affixed to a basic extruder of conventional configuration and deposits a formed filament 58 on a conveyer belt moved by drive roller 56. The filament 58 may be wound on a spool (not shown) for further processing and will be shown. As shown in FIGS. 3 and 4, a chafer strip 70 is formed by extrusion die 60 affixed to extruder 66 and deposited on roller 68. The die 60 is formed having along a chafer forming opening 62 along a bottom side and a downward projection finger 64 projecting into the opening 62. FIG. 6 shows a sectioned view of the extruded chafer strip. As seen, the strip 70 widens in section from a low width or thinner end region 72 to a stepped wider or thicker region 74 to a wider or thicker opposite region 88. The die finger 64 forms an incut, arching chafer channel or tube 80 extending the length of the chafer strip, defined by channel sidewalls 82, 84 and bottom wall 86. The channel is open initially as shown at 90. The chafer strip dimensions may be varied to suit the particular tire sizing needs and the tire construction characteristics desired.

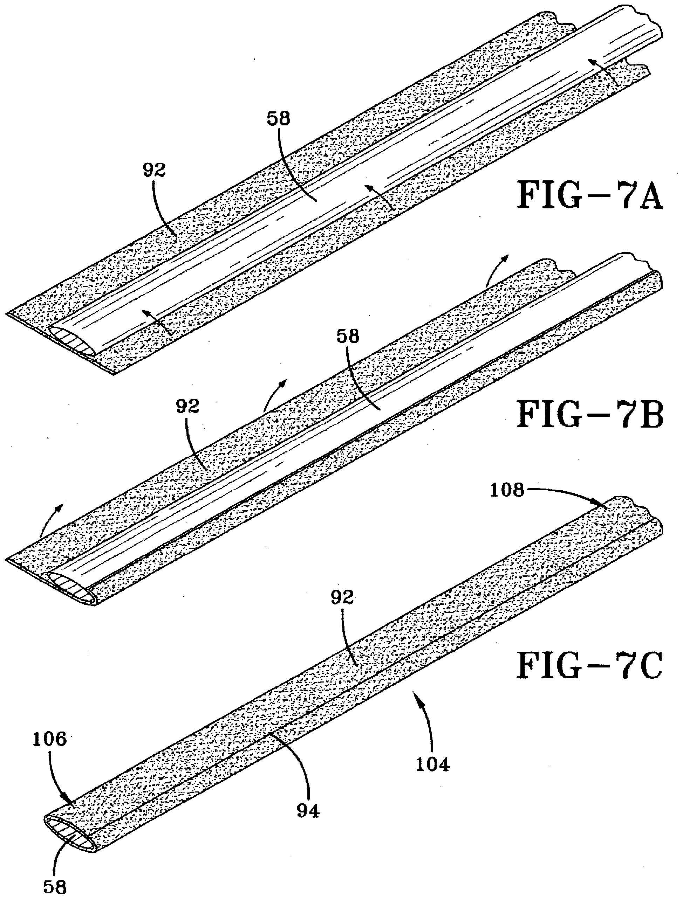

The chafer tube or channel 80, as best seen in section from FIG. 6, is defined by tube sidewalls 82, 84 that angle inwardly from top to bottom to a bottom channel wall 86. The channel 80, formed within a thicker side 88 of the chafer strip is accordingly open at upper opening 90. The channel 80 formed within the chafer is as a result at an acute angle θ. As shown in FIGS. 7A through 7C, the filament 58 is enveloped within a coating 92 formed of rubber composition as will be described in more detail later herein. The coating 92 is folded over the filament 58 to form an overlap seam 94 to enclose the filament 58 and forms therewith a coated filament 104. The coated filament 104, as explained following, will be used to form peristaltic tube within a green tire during green tire construction.

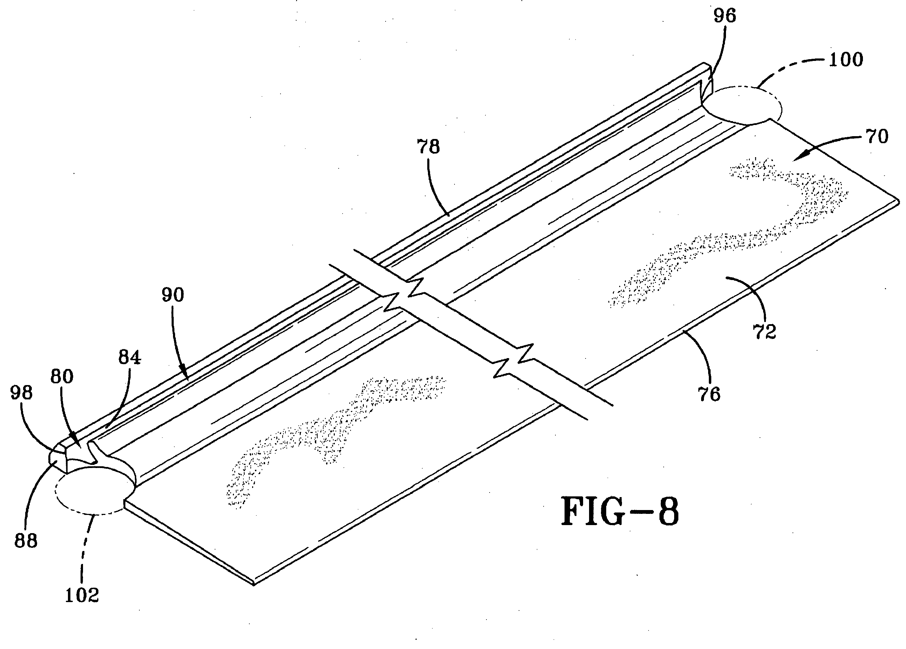

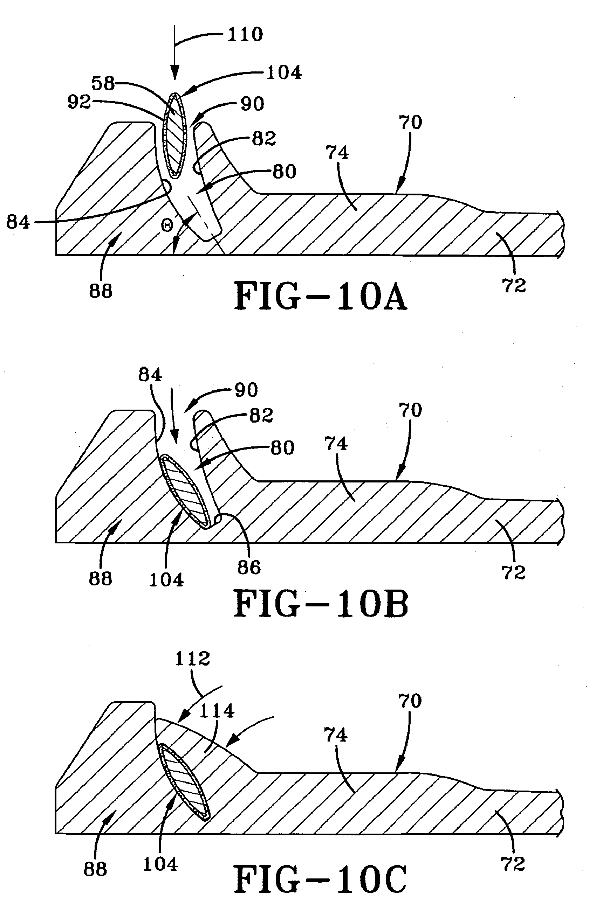

The general purpose of coated filament 104 is to form within a green tire component, such as chafer 28, a core air passageway which, once the filament is removed, forms a peristaltic tube integrally within and enclosed by the tire component. The angled groove 80 is formed within the chafer strip as a slot, with the lips 82, 84 in a close opposed relationship. The groove 80 is then opened to receive the coated filament 104 by an elastic spreading apart of groove lips 82, 84. Thereafter, the coated filament 104 is positioned downward into the groove 80 until reaching a position adjacent to the bottom wall 86. A release of the lips 82, 84 causes the lips to elastic resume their close opposed original orientation. The lips 82, 84 are then stitched together in a rolling operation wherein a roller (not shown) presses the lips 82, 84 into the closed orientation shown in FIGS. 6 and 8 and become entrapped within the chafer strip by a folding over the chafer strip over the top as seen in FIG. 10C. The angle θ of the channel 80 with respect to a bottom surface of the chafer strip enables a complete capture of the coated filament 104 within the tire component, chafer 28, entirely surrounded by the chafer strip material composition.

With reference to FIGS. 8, 9, 10A through 10C and 7B, the channel 80 is destined to become the tube component to a peristaltic pump assembly within the tire chafer 70 and generally extends from chafer strip end 96 to end 98. The chafer is cut at a given length depending on the pump length that is desired when the tire is cured. Formed within each end of the chafer by a punching operation or cutting operation are enlarged diameter circular holes 100, 102. The holes 100, 102 are adjacent the ends of the channel 80 and are sized to accommodate receipt of peristaltic pump inlet and outlet devices (not shown). The lips 82,84 of the chafer channel 80 are pulled apart The coated filament 104 is inserted at direction arrow 110 into the channel 80 as shown in FIGS. 10A through 10C until adjacent and contacting the lower wall 86 of the channel 80. Thereupon, the coated filament 104 is enclosed by the chafer by a folding over of the chafer lip flap 82 in direction 112. The channel 80 is thus closed and subsequently stitched in the closed position by a pair of pressure contact rollers (not shown). So enclosed, the coated filament 104 will preserve the geometry of the channel 80 from green tire build until after tire cure when the coated filament 104 is removed. The coated filament 104 is dimensioned such that ends 106, 108 extend free from the chafer strip 70 and the chafer strip channel 80, and extend a distance beyond the punched holes 100, 102 at opposite ends of the chafer strip.

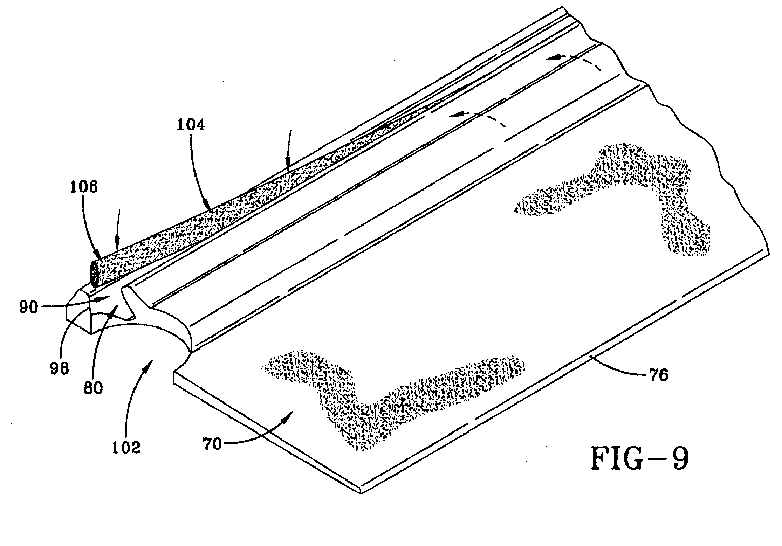

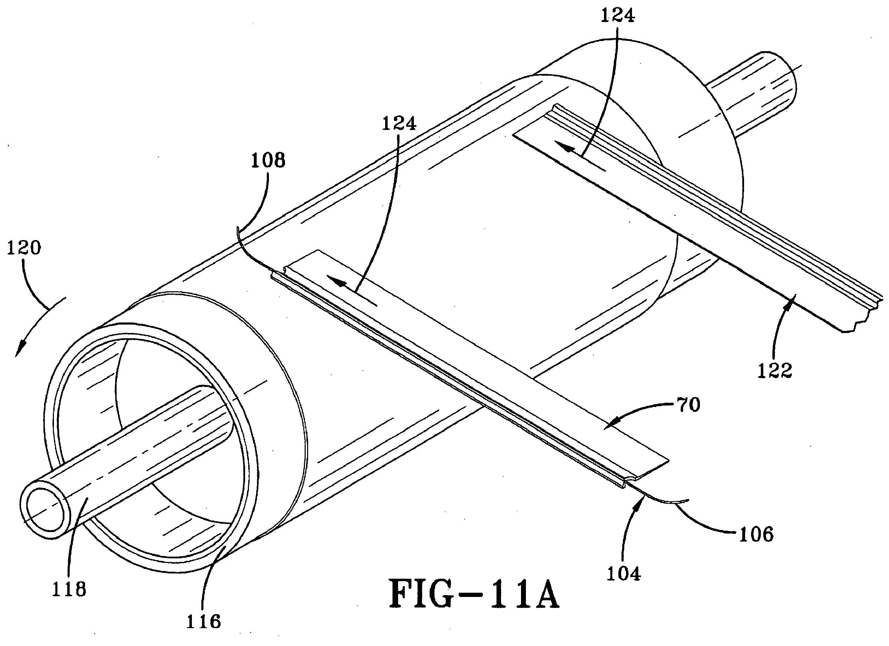

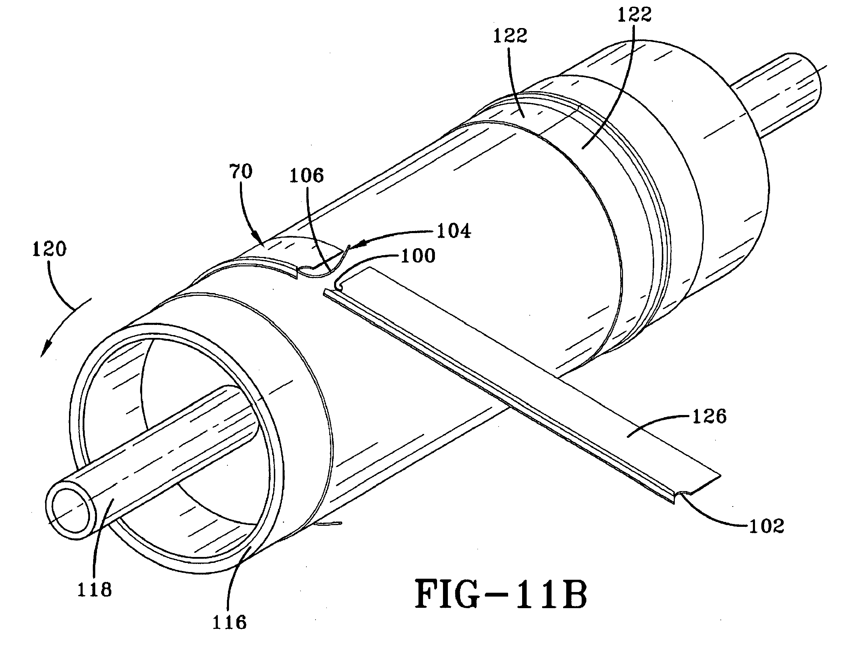

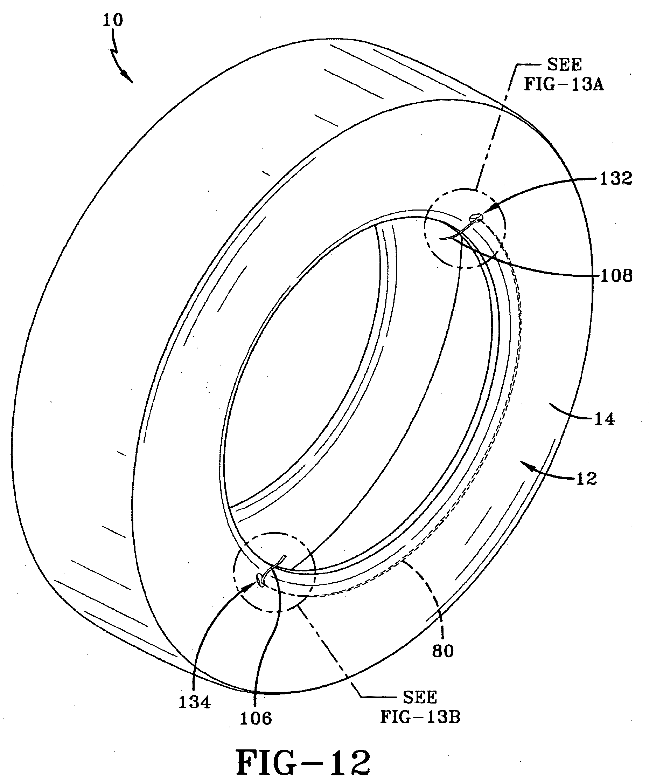

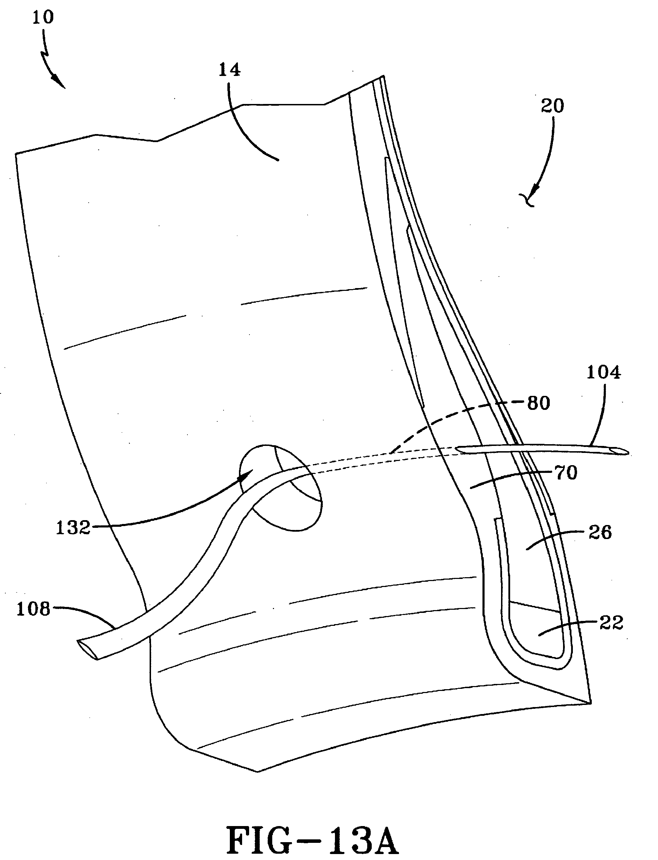

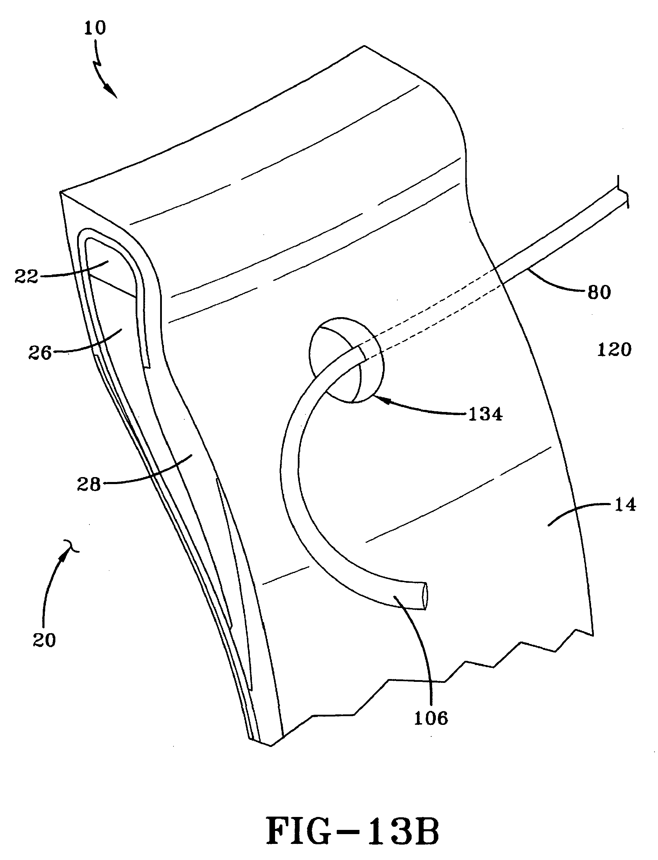

Referring to FIGS. 11A, 11B and 12, a conventional green tire building station is depicted to include a build drum 116 rotational about an axial support 118. The chafer strip 70 containing coated filament 104 and an opposite chafer strip 122 that does not incorporate a coated filament, 104 are positioned along opposite sides of the build drum 116 in direction 124 in an initial 180 degree chafer build-up. The chafer strip 70 is thus combined with a normal chafer strip 126 length to complete the circumference. The second strip 126 is applied to the building drum in alignment with and abutting strip 70 as shown in FIG. 11B to complete a 360 degree chafer construction on the drum. The opposite side of the drum receives two 180 degree normal strips 122 in abutment to complete the chafer build on that side. It will be noted that the chafer strip 70 contains the coated filament while the abutting strip 126 does not. However, if desired, both of the chafer strips 70, 126 as well as one or both of the strips 122 may be configured to contain a coated filament 104 to create a 360 degree peristaltic pump tube on one side or both sides of the green tire. For the purpose of explanation, the embodiment shown creates a pumping tube of 180 degree extent in one chafer component only. In FIG. 11B it will be noted that chafer strip 126 is configured to complement the construction of strip 70 shown in FIGS. 8 and 9. Circular punch holes 100, 102 are at opposite ends of the complementary strip 126. When abutted against the strip 70, the punch holes 100, 102 create 180 degree opposite cavities 132, 134 as seen in FIGS. 13A and 13B.

The free end 106 for the purpose of explanation will hereafter be referred to as the "outlet end portion" of the coated filament 104 extending through the outlet cavity 134; and the free end 108 the "inlet end portion" of the coated filament 104 extending through the circular inlet cavity 132. FIG. 12 illustrates the 180 degree extension of the coated filament 104 and FIGS. 13A,13B show the relative location of the coated filament 104 to the lower tire bead and apex components. FIG. 13A shows the inlet cavity 132 and coated filament 104 ready for placement of a temporary inlet core device and FIG. 13B shows the outlet cavity 134 ready for placement of a temporary outlet core device.

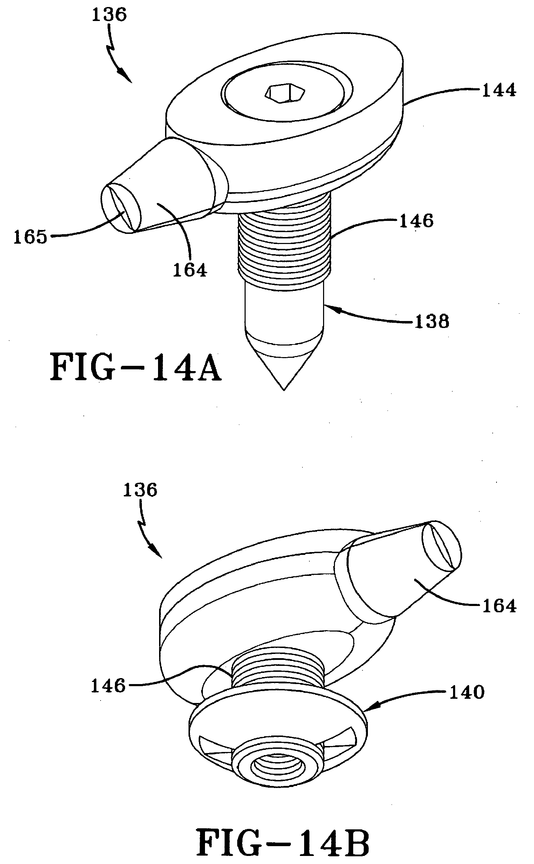

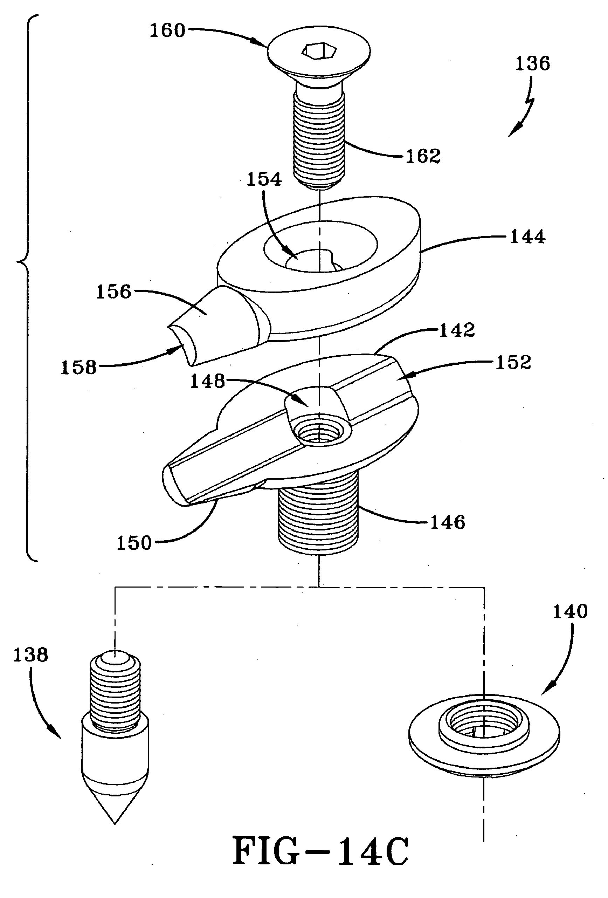

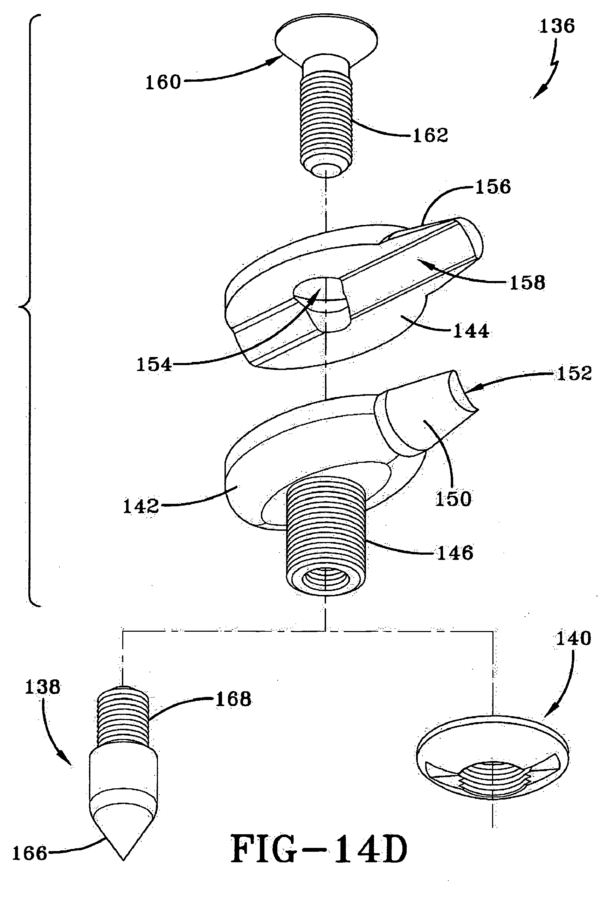

FIGS. 14A through 14D show a first embodiment of a pre-cure, temporary outlet core assembly 136 with attached screw punch 138 and replacement nut 140. The temporary outlet core assembly 136 includes mating bottom half-housing component 142 and a top half-housing component 144 connecting by means of a coupling screw 160. The bottom half-housing component 142 has a dependent cylindrical screw threaded sleeve 146; an upper socket 148 extending downward into the component 142 and communicating with the upward facing opening of sleeve 146; and a half-protrusion 150 having an axial half-channel formed to extend across housing 142. The top-half-housing component 144 has a central through bore 154, a half-protrusion housing 156 and a half-channel formed to extend side to side across an underside of the housing 144. United as shown in FIGS. 14A and 14B, the two half-housing components 142, 144 are assembled by screw 160 threading bolt 162 down through the bore 154 and into the sleeve 146. So assembled, the half-protrusion housings 150 and 156 unite as well as the half-channels 152, 158. In the assembled state, as seen in FIGS. 14A and 14B, the protrusion housings 150, 156 form an outwardly projecting conical tube-coupling protrusion 164 away from the combined housing halves 142, 144 and defining an axial air passageway channel 165 having a sectional shape and dimension corresponding with the coated filament 104 within chafer strip 126 of the tire.

The inwardly and outwardly threaded shaft 146 of the temporary outlet core assembly 136 receives and couples with an externally threaded shaft 168 of the screw punch accessory device 138. As will be explained below, screw punch device 138 will in the course of peristaltic tube assembly formation be replaced with the threaded collar or nut 140 as shown in FIG. 14B.

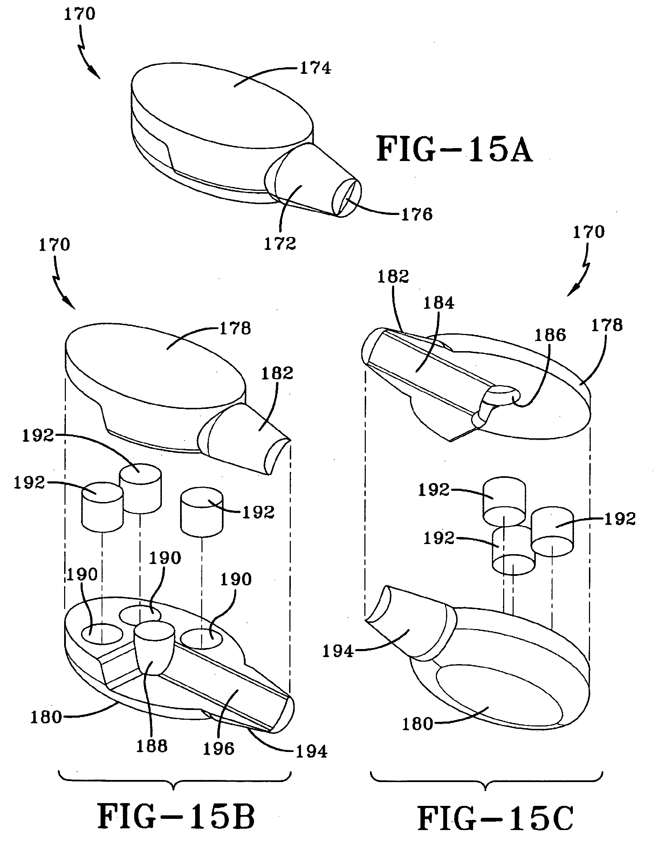

With reference to FIGS. 15A through 15C, a metallic first embodiment of a precure, temporary inlet core assembly 170 is shown forming a housing body 174 from which a conical coupling housing protrusion 172 extends. An axial air passageway through-channel 176 extends through the housing body 174 and the protrusion 172 having a sectional shape and dimension corresponding with the shape and dimensions of the coated filament 104 within the chafer strip 126 of the green tire. The housing body 175 is formed by a combination of half-housing 178, 180, each providing a half-coupling protrusion 182, 194, respectively in which a half-channel 184, 196 is formed, respectively. A central assembly socket 186 extends into the internal underside of half-body 178 and receives an upright post 188 from the lower half-body 180 to center and register the two half-bodies together. Three sockets 190 are formed within the lower half-body 180 with each socket receiving a magnetic insert 192. The magnets 192 operate to secure the metallic half-housings 178 and 180 together.

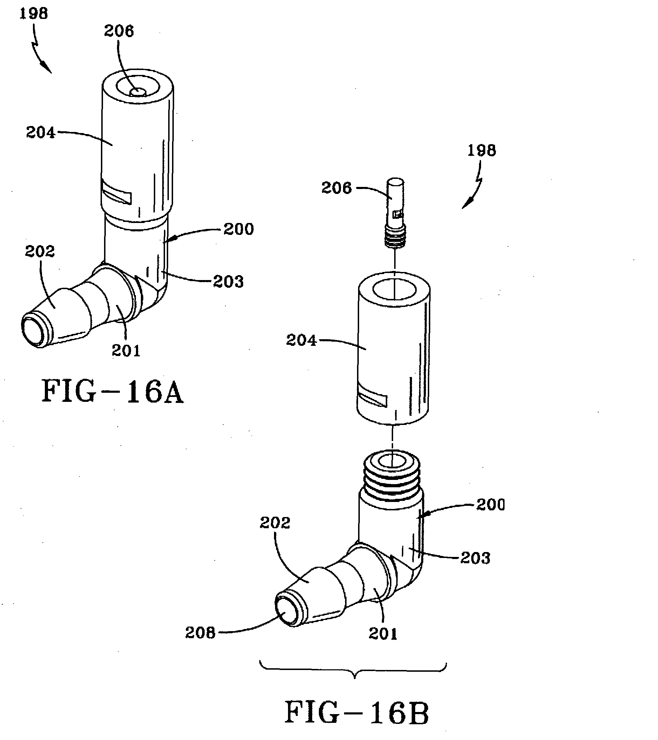

Referencing FIGS. 16A and 16B, a threaded elbow and valve housing assembly 198 is shown for use as a permanent outlet core valve assembly. The housing assembly 198 is formed of a suitable material such as a nylon resin. The assembly 198 includes an elbow housing 200 having a conical remote end 202 and a cylindrical valve housing 204 affixed to an opposite end. A one-way valve, such as a Lee valve, is housed within the valve housing 204. An axial air passageway 208 extends through the L-shaped assembly 198 and through the Lee valve seated in-line with the passageway. A Lee valve is a one-way valve which opens at a prescribed air pressure to allow air to pass and is commercially available from The Lee Company USA, located at Westbrook, CT, USA.

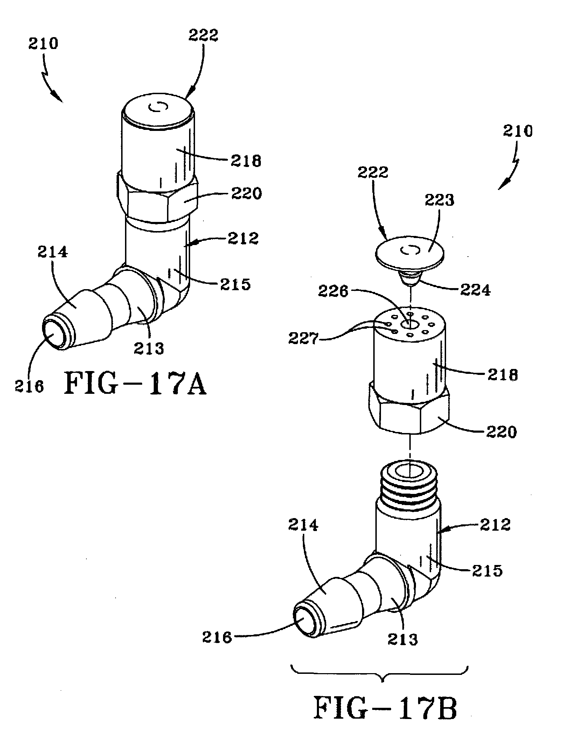

FIGS. 17A and 17B show an alternative embodiment of an elbow connector and one-way post-cure outlet valve assembly 210. A L-shaped elbow connector housing 212 has a conical forward arm end 214 and an axial passageway 216 that extends through the L-shaped housing 212. An umbrella-type valve 218 of a type commercially available from MiniValve International located in Oldenzaal, The Netherlands, attaches to a threaded end of housing 212 by means of nut 220. The valve 218 has a circumferential array of air passages 227 that allow the passing of air from the housing of the valve. The valve 218 includes an umbrella stop member 222 having a frustro-conical depending protrusion 224 that fits and locks within a valve central bore 226 and a flexible circular stop membrane 223. The protrusion 224 of stop member 222 locks into the axial bore 226. The flexible membrane 223 is in a closed or down position when air pressure on the membrane is at or greater than a prescribed pressure setting. In the down position, membrane 223 covers the apertures 227 of the valve body and prevents air from passing. The membrane 223 moves to an up or open position when the air pressure outside the membrane falls to a pressure less than the preset pressure setting. In the up or open position, air can flow from the apertures 227 into the tire cavity.

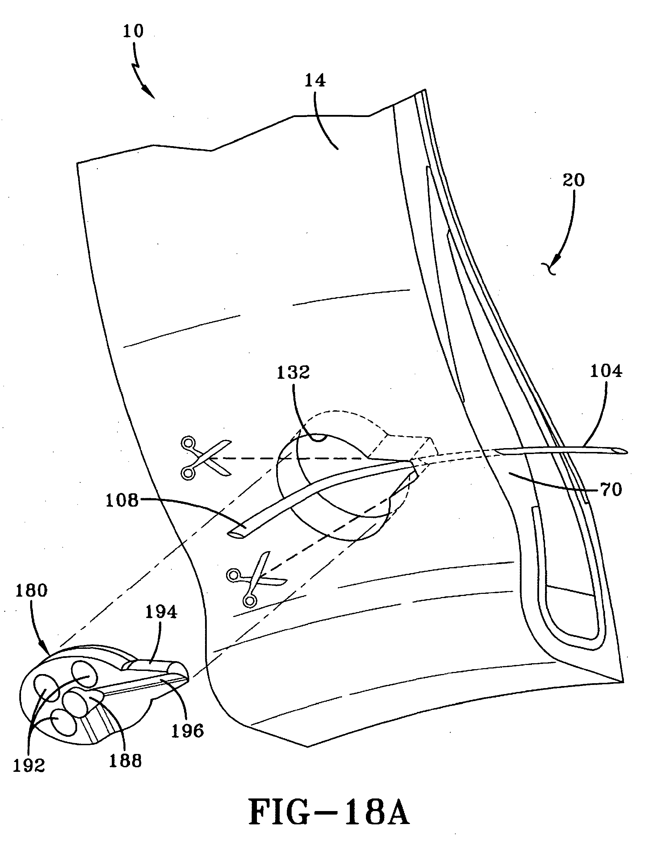

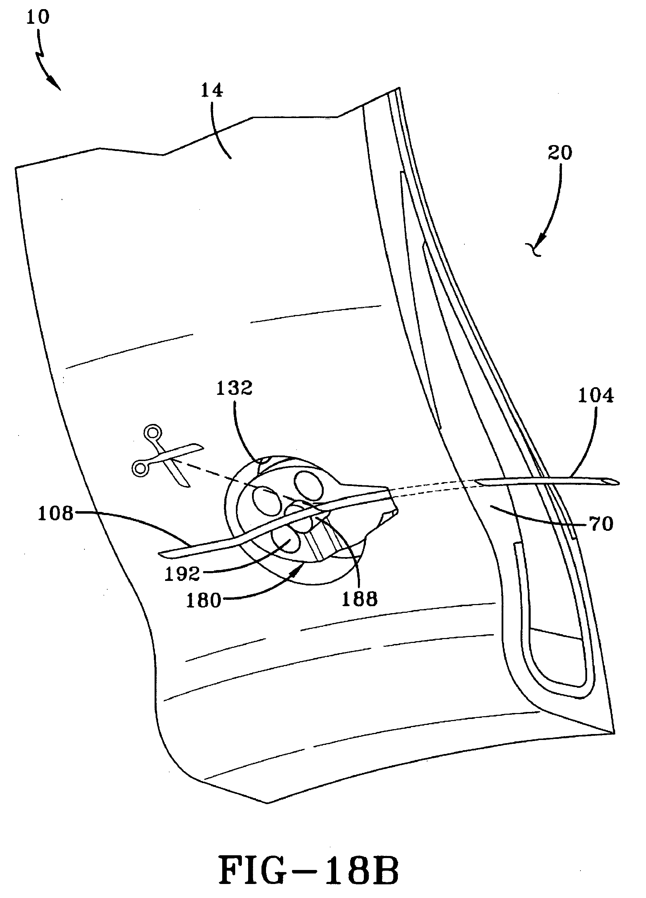

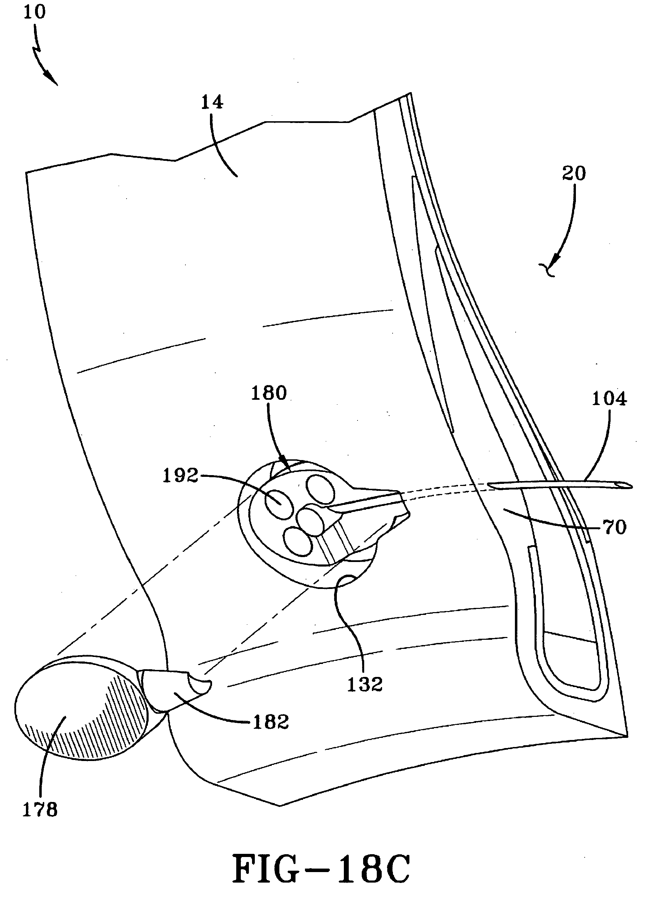

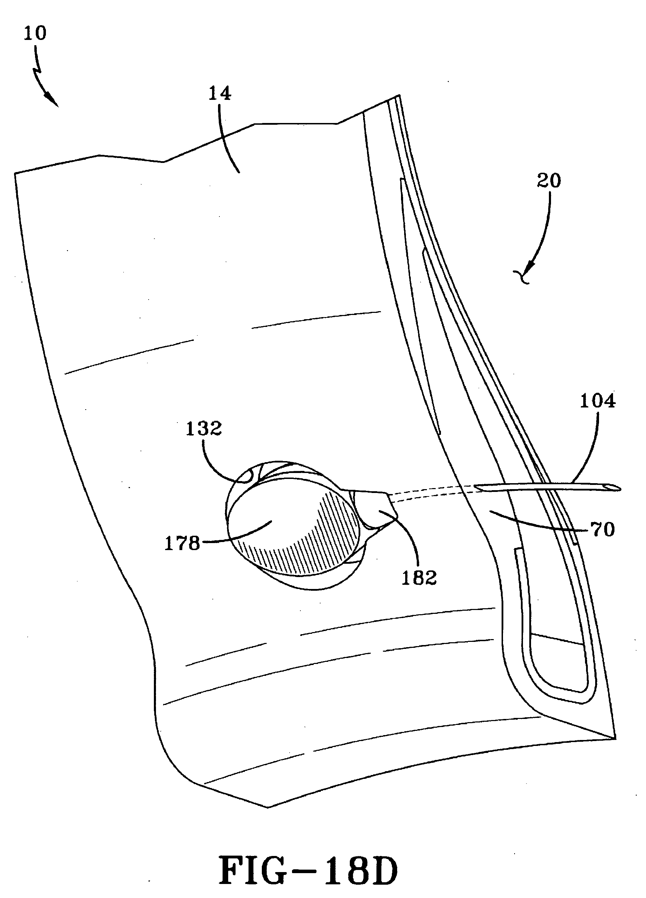

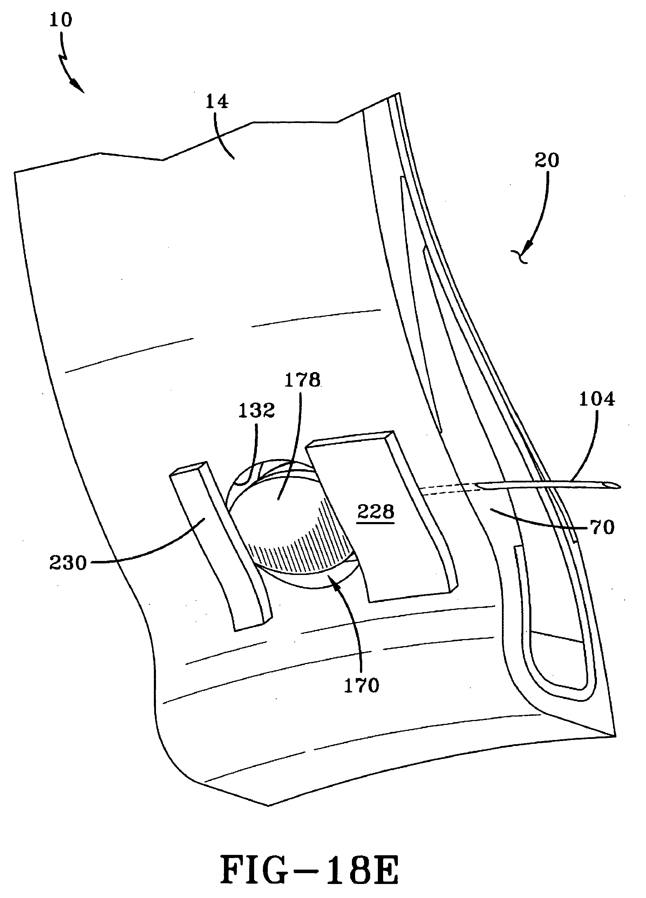

FIGS. 18A through 18D represent sequential views showing the installation of the inlet core assembly embodiment of FIGS. 15A through 15C connecting into the green tire coated filament 104 after green tire build and prior to curing of the green tire. In FIG. 18A, the bottom half housing component 180 is inserted into the inlet cavity 132 after the cavity 132 has been enlarged into generally a key shape as indicated by the scissor representation. The cutting implement opens the chafer strip groove, still occupied by coated filament 104, to accommodate receipt of the conical half-protrusion 194 of half-housing 180. The tapered end of conical half-protrusion 194 fits into the chafer channel occupied by coated filament 104 as shown in FIG. 18B, as the coated filament 104 is position within the half-channel 196 across the housing 180. The extra length of inlet end portion 108 is cut and removed, whereby positioning a terminal end of the coated filament 104 within the housing component 180. The upper, outer, top half-housing component 178 is thereupon assembled over the housing component 180, as seen in FIG. 18D, capturing the coated filament 104 within the channel formed by upper and lower half-channels 184, 196. The magnets 192 secure the metallic half-housings 178, 180 together. Rubber patches 228, 230 as seen in FIG. 18D are applied over the temporary inlet core assembly 170 to secure the assembly in place for the tire cure cycle. The hollow metallic housings 178, 180 are held together by the magnets. It will be appreciated that a non-metallic hollow housing may be employed if desired, such as a hollow housing made of molded plastic, with housing components held together by locking detent techniques known in the plastic casing art.

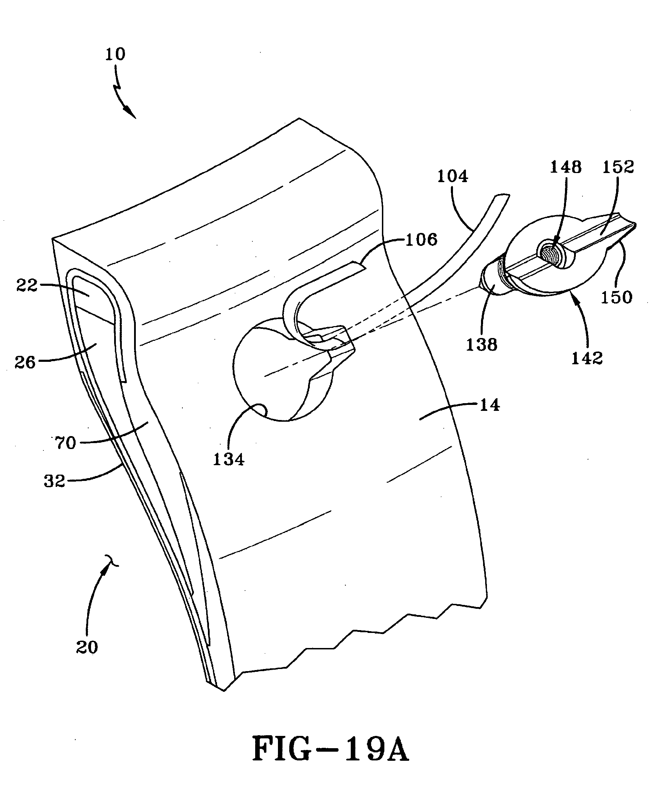

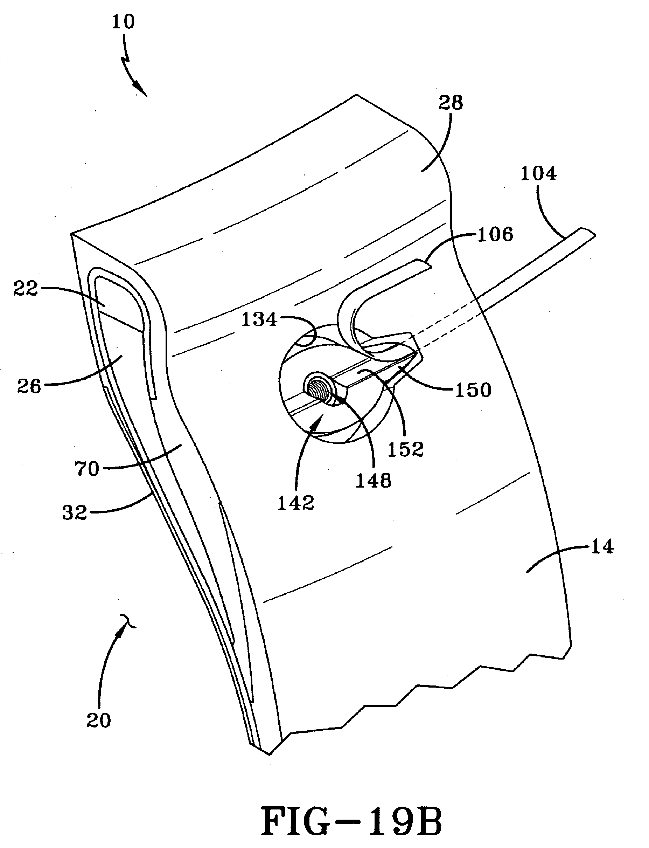

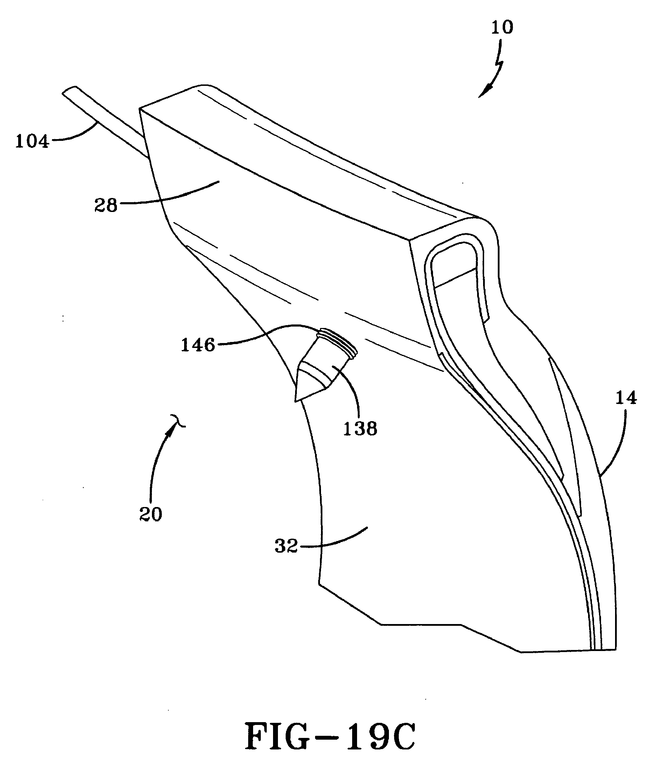

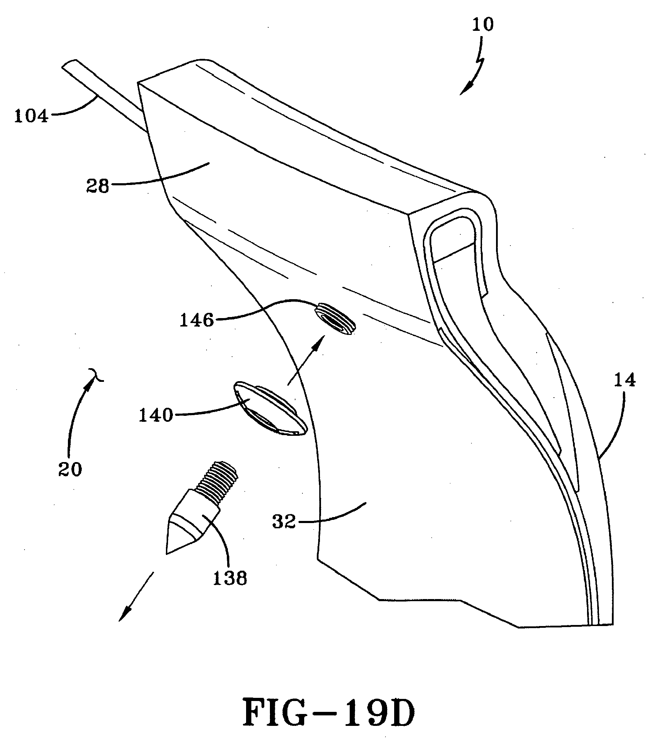

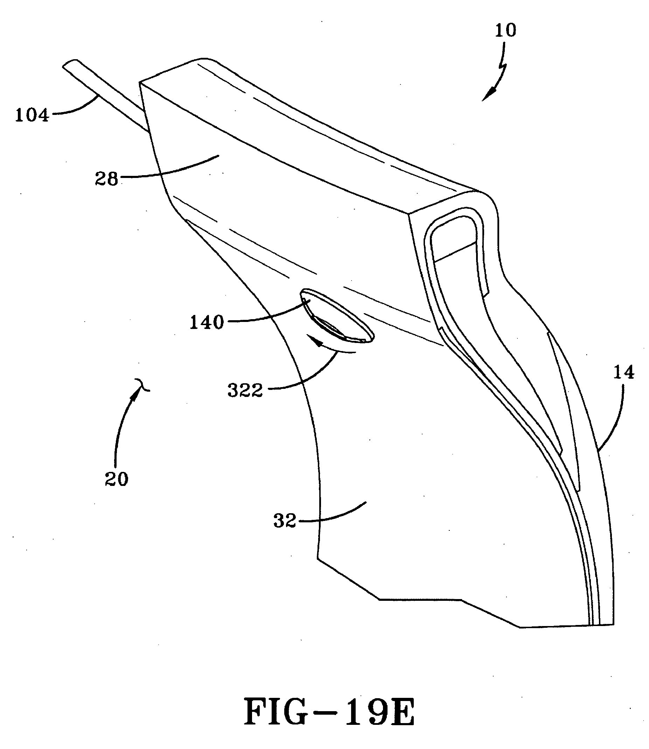

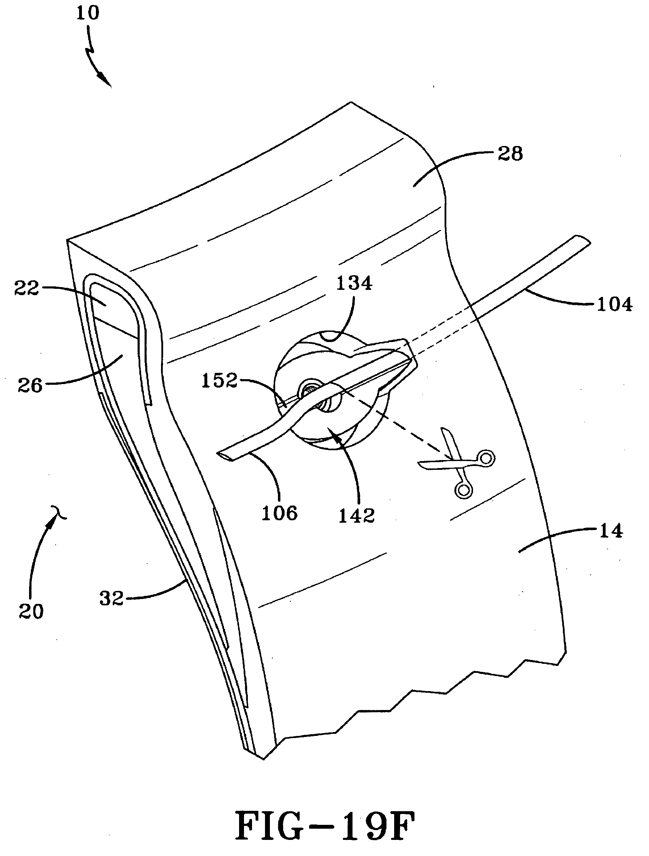

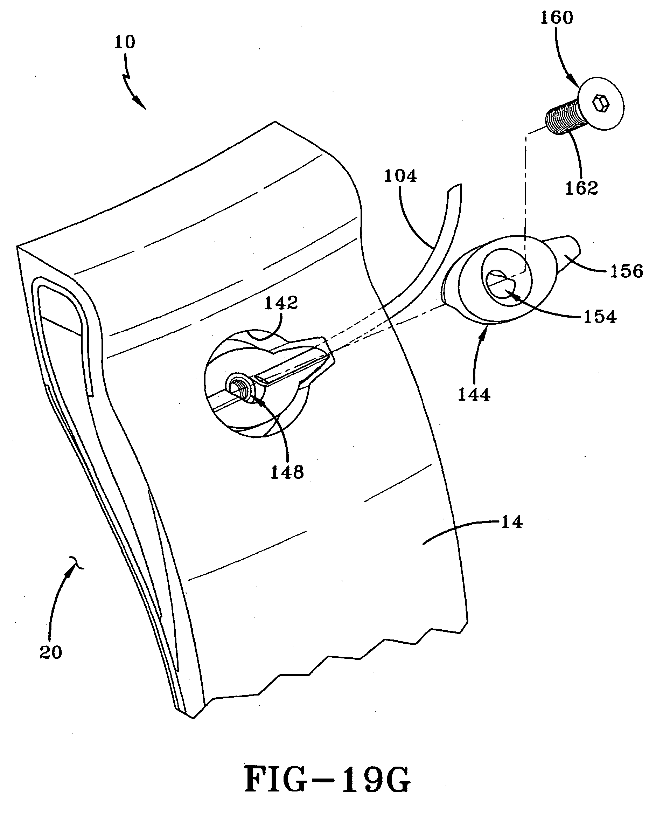

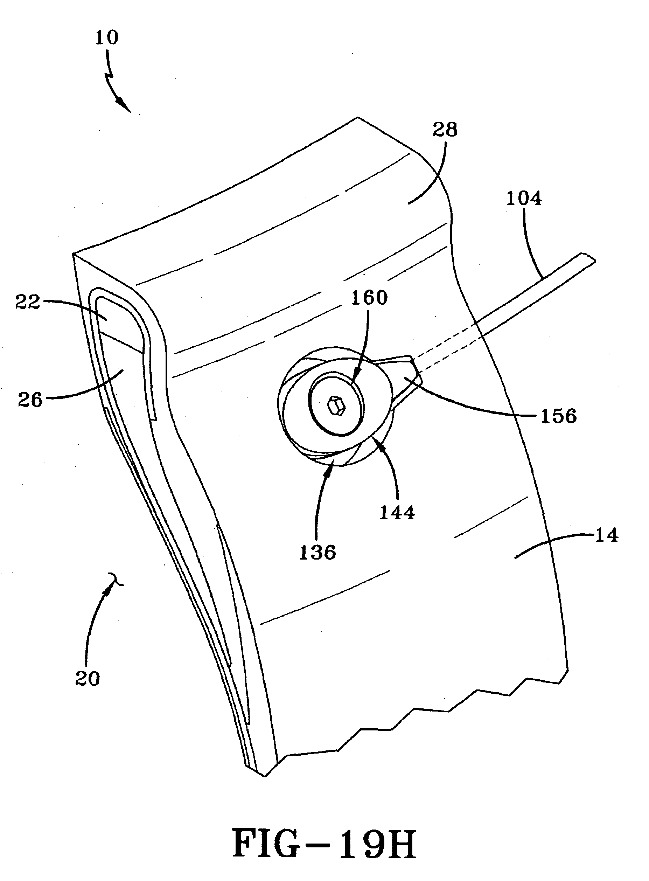

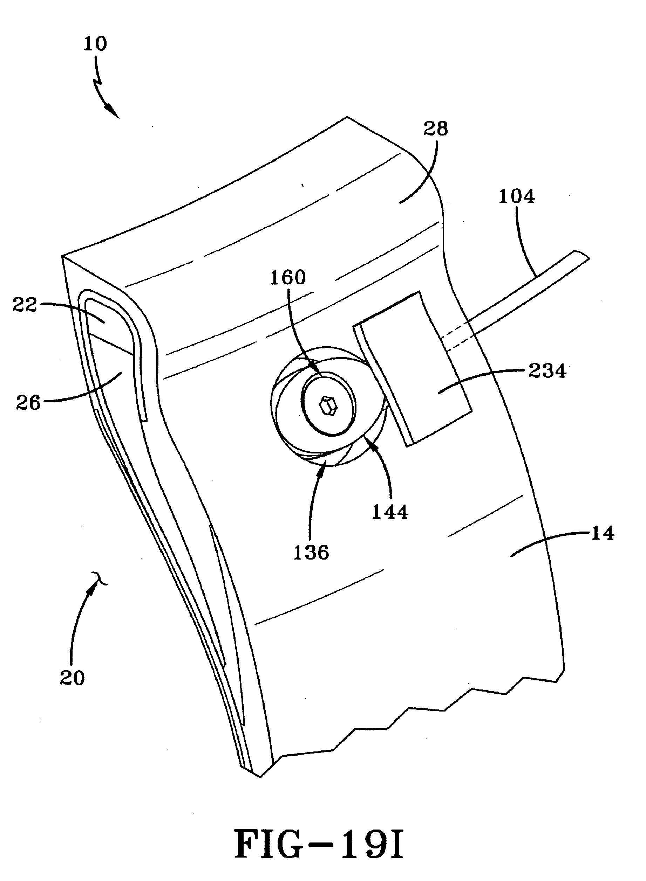

FIGS. 19A through 19I show sequential assembly of the outlet core assembly embodiment of FIGS. 14A through 14D into the green tire outlet cavity 134 and to the outlet end portion 106 of the coated filament 104. In FIG. 19A, the bottom half-component 142 is inserted into the cavity 134 after the circular cavity 134 has been enlarged into a keyhole configuration to accommodate the geometry of the component 142. The screw punch 138 is pushed through to protrude through tire wall into the tire cavity 20 from the cavity 134 as seen in FIG. 19C. FIG. 19B shows the component 142 fully seated into the cavity 134, the tapered conical half-protrusion 159 projecting into the chafer channel occupied by coated filament 104 with the coated filament 104 residing within half-channel 152. In FIG. 19D and 19E, the screw punch 138 is removed and replaced by the nut 140 attached to the screw thread 146. In FIG. 19F, the outlet end portion 106 of coated filament 104 is cut to length at the outlet cavity 134 and placement of the outlet top half-housing 144 over the bottom half-housing 142 within cavity 134. The screw 160 is threaded at 162 into socket 148 to affix both half-housings 142, 144 together as shown in FIGS. 19G and 19H. A rubber patch 234 is affixed over the outlet core assembly 136 in place for tire cure.

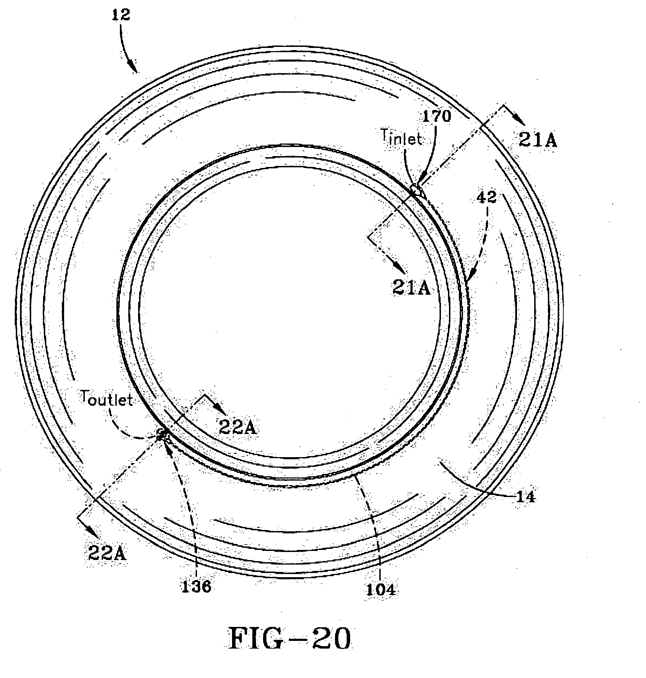

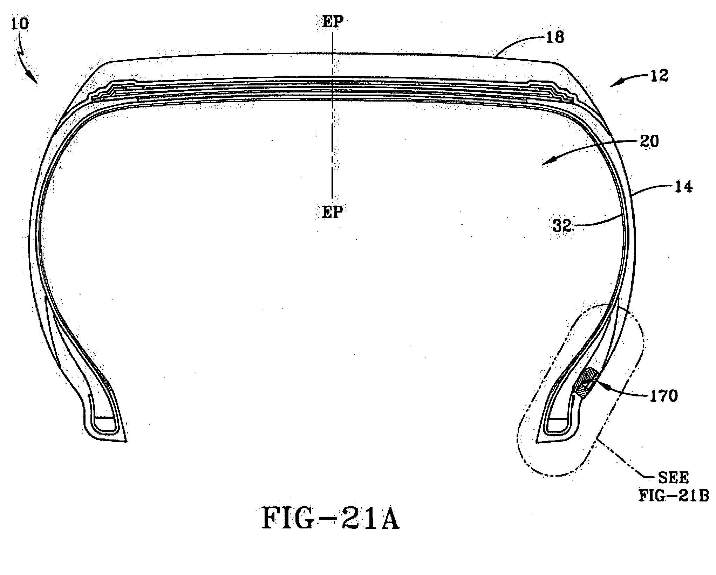

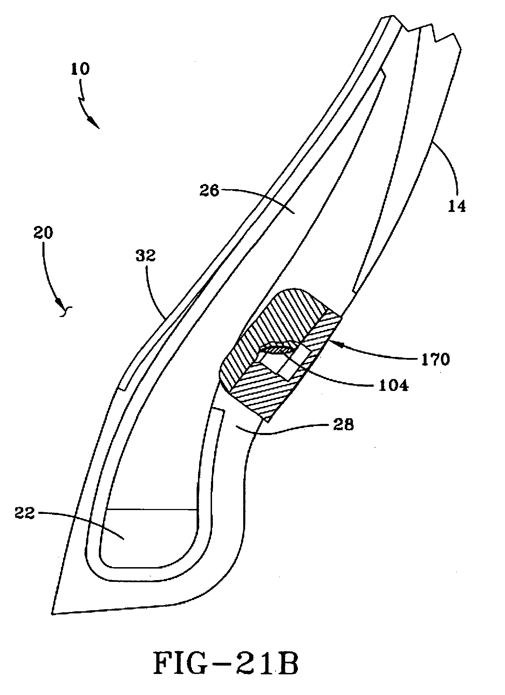

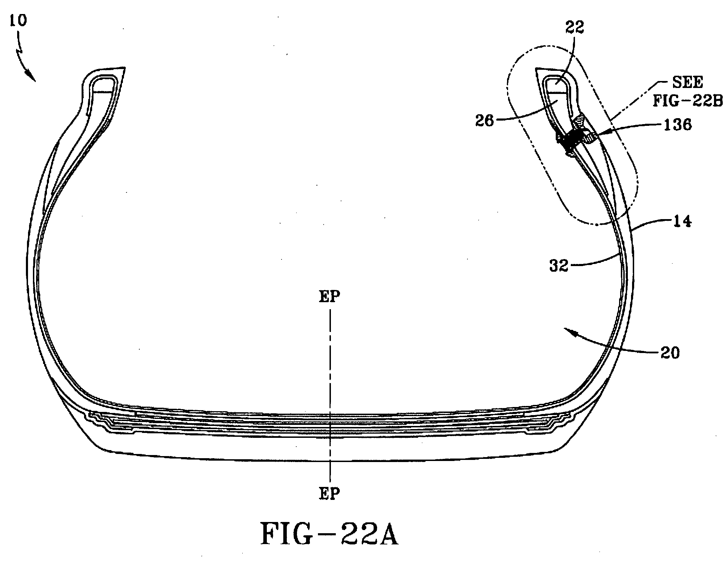

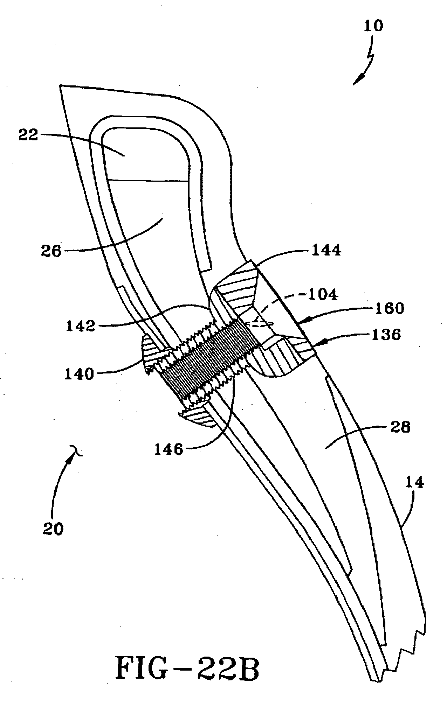

FIGS. 20, 21A, 21B, 22A and FIG. 22B show the tire with the inlet and outlet temporary core assemblies in place before curing. As seen, the coated filament 104 enclosed within a chafer component 28 of the green tire extends 180 degrees between the pre-cure outlet core assembly 136 and the pre-cure inlet core assembly 170. An enlarged depiction of the inlet core location is shown in FIG. 21B from section view FIG. 21A and the outlet core location is shown enlarged in FIG. 22B from the section view of FIG. 22A. The coated filament 104 resides enclosed within the chafer channel and thereby preserves the structural integrity of the chafer channel through tire cure. The sectional configuration of the coated filament 104, as seen, is complementary to chafer channel in which it is encased surrounded by chafer composition, and thereby maintains the configuration of the chafer channel throughout tire cure.

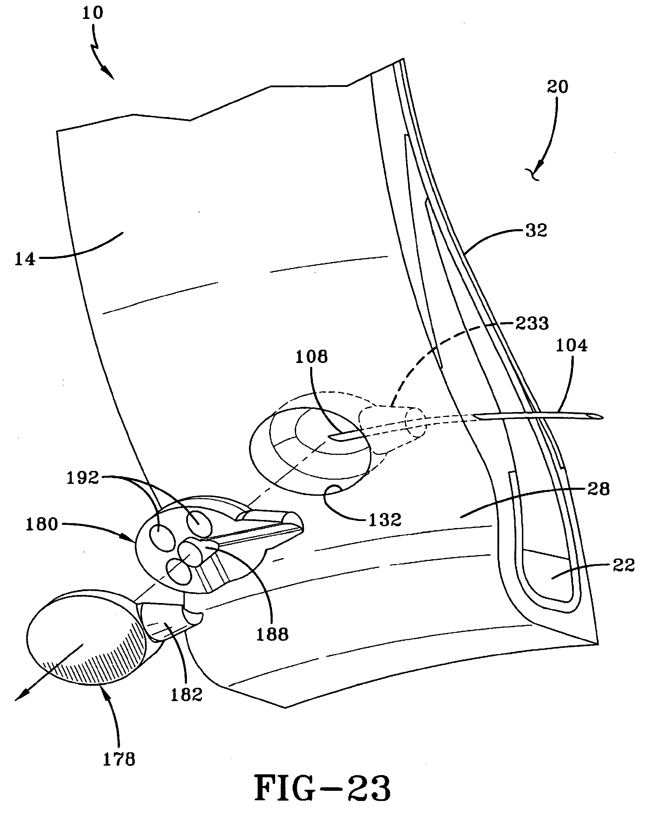

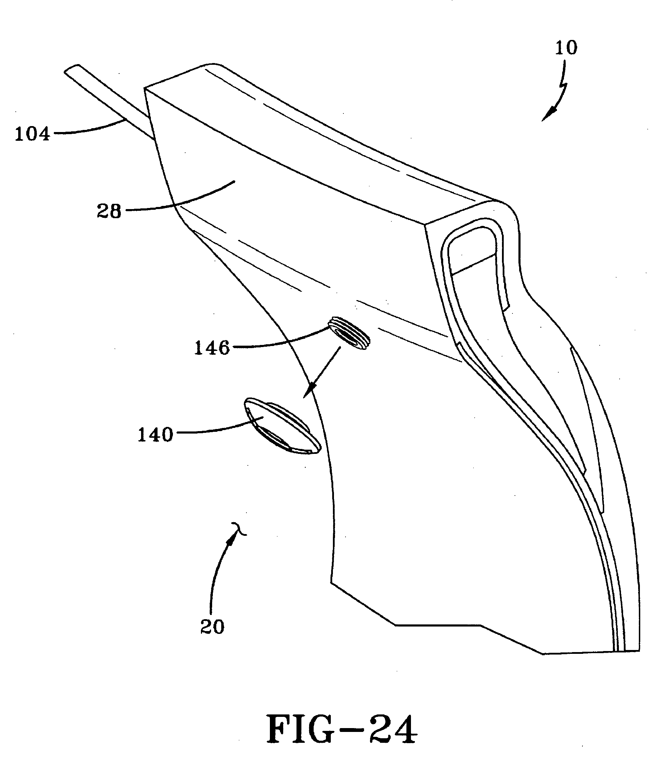

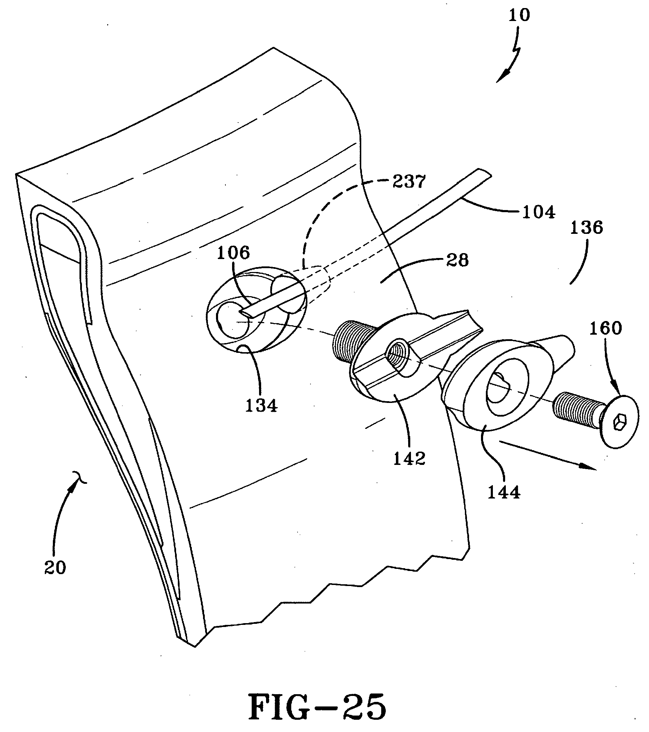

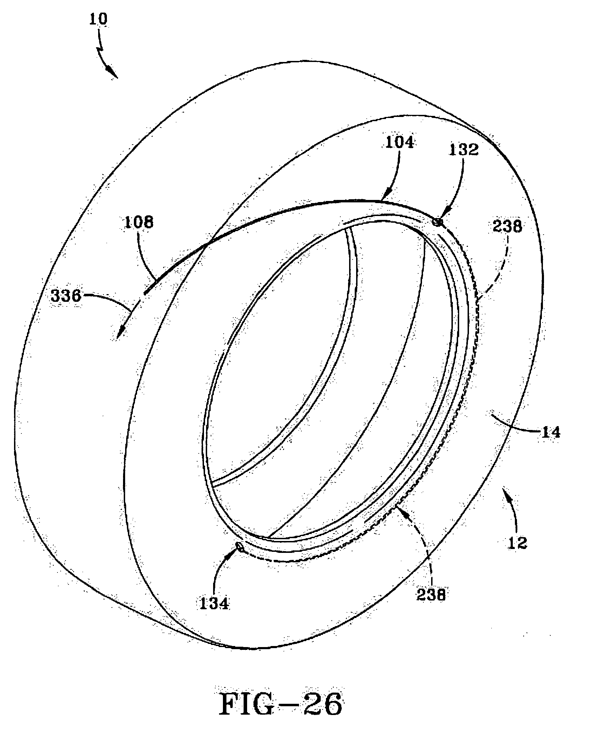

Referring to FIG. 23, the post-cure removal of the half-housings 178, 180 from the inlet cavity 132 is shown. The cavity 132 is thus opened including a funnel-shaped cavity portion 233. FIGS. 24 and 25 show the nut 140 removed from the outlet core threaded shaft 146 to initiate a post-cure removal of the outlet core assembly 136. The assembly components 142, 144 are removed from the outlet cavity 134, leaving the cavity 134 including funnel-shaped adjacent cavity portion 237 open. Thereafter, as shown by FIG. 26 the coated filament 104 is removed from the tire chafer channel, whereby the chafer channel left by the vacated coated filament 104 becomes an elongate unobstructed 180 degree air passageway 238 from the inlet cavity 132 to the outlet cavity 134, wholly integrated within the chafer component 28.

Removal of the coated filament 104 as indicated in FIG. 26 is shown as a complete removal of the filament with the associated coating. In fact, while the filament is entirely removed, in some embodiments at least part of the coating material may remain adhered to the interior surfaces of the air passageway 238. The amount of coating material remaining in the air passageway 238 is insufficient to block the passage of air and the air passageway remains unobstructed and usable for its intended purpose as a peristaltic tube.

The green tire component may include both the chafer as well as a tire carcass, tire sidewall, and tire tread. The green tire component may be uncured, or fully or partially pre-cured before incorporation into the green tire.

As inserted into the tire component, the coated filament is constructed of a relatively thin filament coated with a rubber composition.

The relatively thin filament is an elongate body of relatively constant cross section. Suitable cross sections for the filament are not limited, and include circular, oval and lens. Suitable filaments include those made of metal and polymers. Suitable metals include steel. Suitable polymers include thermoplastics and silicone rubber.

Thermoplastics suitable for use as filaments include polyamides, polyesters, and poly(vinyl alcohols). Included in the polyamides are nylon 6, nylon 66, nylon 612, among others. Included in the polyesters are polyethylene terephthalate and polyethylene naphthalate, among others.

In one embodiment, the filament has a relatively circular cross section. In one embodiment, the filament has a diameter ranging from 0.5 to 5 mm.

In one embodment, the filament is a so-called nylon monofilament.

Referring again to FIGS. 7A, 7B, and 7C, one embodiment is illustrated for coating filament 58 with coating material 92. Other methods for coating the filament with the rubber composition include calendaring or extruding the rubber composition onto the filament.

The coating material 92 used for coating the filament 58 is a rubber composition including heat expandable thermoplastic resin particles containing therein a liquid or solid capable of generating a gas upon vaporization, decomposition, or a chemical reaction under heating. Use of the rubber composition as the coating material facilitates removal of the filament 58 from the tire chafer channel to leave air passageway 238 as seen in FIG. 26.

In one embodiment, the rubber composition includes from 1 to 20 phr of heat expandable thermoplastic resin particles containing therein a liquid or solid capable of generating a gas upon vaporization, decomposition, or a chemical reaction under heating. In one embodiment, the rubber composition includes 5 to 10 phr of heat expandable thermoplastic resin particles containing therein a liquid or solid capable of generating a gas upon vaporization, decomposition, or a chemical reaction under heating.

The heat expandable thermoplastic resin particles contain therein a liquid or solid which vaporizes, decomposes, or chemically reacts under heat to generate a gas in a thermoplastic resin. These heat expandable thermoplastic resin particles are heated to expand at a temperature above the temperature of start of expansion, normally a temperature of 140 to 190 °C. The gas is sealed inside a shell comprised of the thermoplastic resin. Therefore, the size of the gas-encompassed thermoplastic resin particles is preferably 5 to 300 µm, more preferably 10 to 200 µm before expansion.

Examples of such heat expandable thermoplastic resin particles (unexpanded particles) are commercially available as the Expancel series from Sweden's Expancel Co. or the Matsumoto Microsphere series from Matsumoto Yushi-Seiyaku Co.

The preferable thermoplastic resin comprising the outer shell of the gas-encompassed thermoplastic resin particles are, for example, those having a temperature of start of expansion of at least 100 °C, preferably at least 120 °C, and a maximum temperature of expansion of at least 150° C, preferably at least 160 °C. Examples of such a thermoplastic resin are a (meth)acrylonitrile polymer or a copolymer having a high content of (meth)acrylonitrile. As the other monomer (i.e., comonomer) in the case of a copolymer, a halogenated vinyl, halogenated vinylidene, styrene based monomer, (meth)acrylate based monomer, vinyl acetate, butadiene, vinyl pyridine, chloroprene, or other monomer may be used. Note that the above-mentioned thermoplastic resin may be cross-linked by a cross-linking agent such as divinylbenzene, ethylene glycol di(meth)acrylate, triethylene glycol di(meth)acrylate, trimethylolpropane tri(meth)acrylate, 1,3-butylene glycol di(meth)acrylate, ary(meth)acrylate, triacrylformal, and triarylisocyanulate. For the cross-linking mode, noncross-linking condition is preferable, but partial cross-linking to an extent not detracting from the properties as the thermoplastic resin is also possible.

Examples of the liquid or solid capable of generating a gas by vaporization, decomposition, or chemical reaction under heat are hydrocarbons such as n-pentane, isopentane, neopentane, butane, isobutane, hexane, and petroleum ether, liquids such as a chlorinated hydrocarbon, e.g., methyl chloride, methylene chloride, dichloroethylene, trichloroethane, and trichloroethylene, or solids such as azodicarbonamide, dinitrosopentamethylene-tetramine, azobisisobutyronitrile, toluenesulfonyl hydrazide derivative, or aromatic succinyl hydrazide.

The rubber composition includes, in addition to the heat expandable thermoplastic resin particles containing therein a liquid or solid capable of generating a gas upon vaporization, decomposition, or a chemical reaction under heating, one or more diene based elastomers. The phrases "rubber or elastomer containing olefinic unsaturation" or "diene based elastomer" are equivalent and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion.

The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B- 6,242,534; US-B-6,207,757; US-B- 6,133,364; US-B- 6,372,857; US-B- 5,395,891; or US-B- 6,127,488, and plasticized starch composite filler including to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z I

in which Z' is selected from the group consisting of 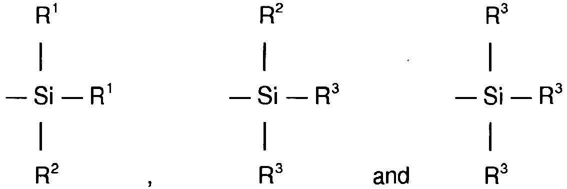 where R¹ is an alkyl group of 1 to 4 carbon atoms, cyclohexyl or phenyl; R² and R³ are alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z' may be 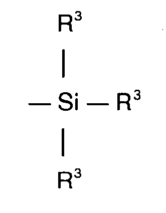 where R³ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NKT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

## Claims

1. A method of providing a passageway in a tire, the method comprising:
providing a filament (58) coated with a coating material (92), the coating material (92) comprising at least one diene based elastomer and a material containing therein a liquid oar a solid capable of generating a gas upon vaporization, decomposition, or a chemical reaction under heating;
encasing the coated filament (104) into containment within an uncured or a pre-cured flexible tire component (70);
building a green tire from tire components including the uncured or pre-cured flexible tire component (70) and the encased coated filament (104);
curing the green tire including the flexible tire component (70) containing the coated filament (104); and
removing the filament (58) from the cured flexible tire component to leave within the flexible tire component a substantially unobstructed air passageway (80).

2. The method of claim 1 wherein the material containing therein a liquid or a solid is a thermoplastic resin or is or comprises heat expandable thermoplastic resin particles, the thermoplastic resin or the heat expandable thermoplastic resin particles containing therein said liquid or solid capable of generating a gas upon vaporization, decomposition, or a chemical reaction under heating.

3. The method of claim 1 or 2 wherein the uncured or pre-cured flexible tire component (70) is a tire carcass component, a tire sidewall component, a tire tread component, a tire chafer component, or a tire apex component.

4. The method of at least one of the previous claims wherein the coated filament (104) extends between an air inlet and an air outlet cavity in the uncured or pre-cured flexible tire component (70).

5. The method of at least one of the previous claims further comprising removing the filament (58) axially from the cured flexible tire component by means of drawing a free end of the filament (58).

6. The method of at least one of the previous claims further comprising inserting a temporary air inlet assembly into an air inlet cavity prior to curing the green tire and/or inserting a temporary air outlet assembly into an air outlet cavity prior to curing the green tire; and removing the temporary air inlet assembly and/or the temporary air outlet assembly after curing the green tire.

7. The method of claim 6 wherein the temporary air inlet assembly is a pre-cured temporary air inlet assembly and wherein the temporary air outlet assembly is a pre-cured temporary air outlet assembly.

8. The method of claim 6 or 7, further comprising extending the air outlet assembly through a tire sidewall into communication with a tire cavity.

9. The method of claim 6, 7 or 8, further comprising extending the air outlet assembly through a tire sidewall into air flow communication between the unobstructed air passageway and a tire cavity.

10. The method of at least one of the previous claims further comprising:
encasing the coated filament into a containment with the uncured or pre-cured flexible tire component by:
forming a channel into the uncured or pre-cured flexible tire component defined by channel sidewalls and a channel bottom wall;
inserting the coated filament (104) into the channel; and
collapsing a flexible channel sidewall over the coated filament (104).

11. The method of claim 10 wherein forming a channel into the uncured or pre-cured flexible tire component is by extruding the uncured flexible tire component with the channel formed therein.

12. A coated filament comprising a filament (58) and a coating material (92) coating the filament (58), the coating material (92) comprising at least one diene based elastomer and a material containing therein a liquid or a solid capable of generating a gas upon vaporization, decomposition, or a chemical reaction under heating, **characterized in that** (i) the material containing therein a liquid or a solid is a thermoplastic resin or is or comprises heat expandable thermoplastic resin particles, the thermoplastic resin or the heat expandable thermoplastic resin particles containing therein said liquid or solid capable of generating a gas upon vaporization, decomposition, or a chemical reaction under heating; or **in that** (ii) the filament is a polyamide filament, a polyester filament, or a poly(vinyl alcohol) filament; and/or wherein the material or the heat expandable thermoplastic resin particles are (meth)acrylonitrile polymer particles or copolymer particles preferably having a high content of (meth)acrylonitrile; or **in that** (iii) the liquid or solid capable of generating a gas upon vaporization, decomposition, or a chemical reaction under heating is a hydrocarbon such as n-pentane, isopentane, neopentane, butane, isobutane, hexane, and petroleum ether; a chlorinated hydrocarbon such as methyl chloride, methylene chloride, dichloroethylene, trichloroethane, and trichloroethylene; or azodicarbonamide, dinitrosopentamethylenetetramine, azobisisobutyronitrile, a toluenesulfonyl hydrazide derivative, or aromatic succinyl hydrazide.

## Patentansprüche

1. Verfahren zur Bereitstellung eines Luftdurchgangs in einem Reifen, wobei das Verfahren umfasst:
Bereitstellen eines mit einem Beschichtungsmaterial (92) beschichteten Filaments (58), wobei das Beschichtungsmaterial (92) mindestens ein dienbasiertes Elastomer umfasst und ein Material, das darin eine Flüssigkeit oder einen Feststoff enthält, die bzw. der fähig ist, bei Verdampfung, Zersetzung oder einer chemischen Reaktion bei Erhitzung ein Gas zu erzeugen;
Umhüllen des beschichteten Filaments (104) in Einschluss in einem unvulkanisierten oder einem vorvulkanisierten flexiblen Reifenbauteil (70);
Aufbauen eines Reifenrohlings aus Reifenbauteilen einschließlich des unvulkanisierten oder eines vorvulkanisierten flexiblen Reifenbauteils (70) und des umhüllten beschichteten Filaments (104);
Vulkanisieren des Reifenrohlings einschließlich des flexible Reifenbauteils (70), welches das beschichtete Filament (104) enthält; und
Entfernen des Filaments (58) aus dem vulkanisierten flexiblen Reifenbauteil, um in dem flexiblen Reifenbauteil einen im Wesentlichen ungehinderten Luftdurchgang (80) zu belassen.

2. Verfahren nach Anspruch 1, wobei das Material, das darin eine Flüssigkeit oder einen Feststoff enthält, ein thermoplastisches Harz ist oder wärmeexpandierbare thermoplastische Harzpartikel ist oder umfasst, wobei das thermoplastische Harz oder die wärmeexpandierbaren thermoplastischen Harzpartikel darin besagte Flüssigkeit oder besagten Feststoff enthalten, die bzw. der fähig ist, bei Verdampfung, Zersetzung oder einer chemischen Reaktion bei Erhitzung ein Gas zu erzeugen.

3. Verfahren nach Anspruch 1 oder 2, wobei das unvulkanisierte oder vorvulkanisierte flexible Reifenbauteil (70) ein Reifenkarkassenbauteil, ein Reifenseitenwandbauteil, ein Reifenlaufflächenbauteil, ein Reifenwulstschutzstreifenbauteil oder ein Reifenkernprofilbauteil ist.

4. Verfahren nach mindestens einem der vorhergehenden Ansprüche, wobei das beschichtete Filament (104) sich zwischen einem Lufteinlass und einem Luftauslasshohlraum in dem unvulkanisierten oder vorvulkanisierten flexiblen Reifenbauteil (70) erstreckt.

5. Verfahren nach mindestens einem der vorhergehenden Ansprüche, weiter das Entfernen des Filaments (58) axial aus dem vulkanisierten flexiblen Reifenbauteil mittels Ziehens an einem freien Ende des Filaments (58) umfassend.

6. Verfahren nach mindestens einem der vorhergehenden Ansprüche, weiter das Einbringen einer vorläufigen Lufteinlassanordnung in einen Lufteinlasshohlraum vor dem Vulkanisieren des Reifenrohlings und/oder das Einbringen einer vorläufigen Luftauslassanordnung in einen Luftauslasshohlraum vor dem Vulkanisieren des Reifenrohlings; und Entfernen der vorläufigen Lufteinlassanordnung und/oder der vorläufigen Luftauslassanordnung nach dem Vulkanisieren des Reifenrohlings umfassend.

7. Verfahren nach Anspruch 6, wobei die vorläufige Lufteinlassanordnung eine vorvulkanisierte vorläufige Lufteinlassanordnung ist und wobei die vorläufige Luftauslassanordnung eine vorvulkanisierte vorläufige Luftauslassanordnung ist.

8. Verfahren nach Anspruch 6 oder 7, weiter das Erstrecken der Luftauslassanordnung durch eine Reifenseitenwand in Kommunikation mit einem Reifenhohlraum umfassend.

9. Verfahren nach Anspruch 6, 7 oder 8, weiter das Erstrecken der Luftauslassanordnung durch eine Reifenseitenwand in Luftstromkommunikation zwischen dem ungehinderten Luftdurchgang und einem Reifenhohlraum umfassend.

10. Verfahren nach mindestens einem der vorhergehenden Ansprüche, weiter umfassend:
Umhüllen des beschichteten Filaments in einen Einschluss mit dem unvulkanisierten oder vorvulkanisierten flexiblen Reifenbauteil durch:
Einformen eines Kanals in den unvulkanisierten oder vorvulkanisierten flexiblen Reifenbauteil, definiert durch Kanalseitenwände und eine Kanalbodenwand;
Einbringen des beschichteten Filaments (104) in den Kanal; und
Umklappen einer flexiblen Kanalseitenwand über das beschichtete Filament (104).

11. Verfahren nach Anspruch 10, wobei das Einformen eines Kanals in das unvulkanisierte oder vorvulkanisierte flexible Reifenbauteil durch Extrudieren des unvulkanisierten flexiblen Reifenbauteils mit dem darin geformten Kanal geschieht.

12. Beschichtetes Filament, umfassend ein Filament (58) und ein Beschichtungsmaterial (92), womit das Filament (58) beschichtet ist, wobei das Beschichtungsmaterial (92) mindestens ein dienbasiertes Elastomer und ein Material, das darin eine Flüssigkeit oder einen Feststoff enthält, die bzw. der fähig ist, bei Verdampfung, Zersetzung oder einer chemischen Reaktion bei Erhitzung ein Gas zu erzeugen, umfasst, **dadurch gekennzeichnet, dass** (i) das Material, das darin eine Flüssigkeit oder einen Feststoff enthält, ein thermoplastisches Harz ist oder wärmeexpandierbare thermoplastische Harzpartikel ist oder umfasst, wobei das thermoplastische Harz oder die wärmeexpandierbaren thermoplastischen Harzpartikel darin besagte Flüssigkeit oder besagten Feststoff enthalten, die bzw. der fähig ist, bei Verdampfung, Zersetzung oder einer chemischen Reaktion bei Erhitzung ein Gas zu erzeugen; oder dass (ii) das Filament ein Polyamidfilament, ein Polyesterfilament oder ein Poly(vinylalkohol)-Filament ist; und/oder wobei das Material oder die wärmeexpandierbaren thermoplastischen Harzpartikel (Meth)acrylnitrilpolymerpartikel oder Copolymerpartikel, die bevorzugt einen hohen Gehalt an (Meth)acrylnitril aufweisen, sind; oder dass (iii) die Flüssigkeit oder der Feststoff, die bzw. der fähig ist, bei Verdampfung, Zersetzung oder einer chemischen Reaktion bei Erhitzung ein Gas zu erzeugen, ein Kohlenwasserstoff ist, wie etwa n-Pentan, Isopentan, Neopentan, Butan, Isobutan, Hexan, und Waschbenzin; ein chlorierter Kohlenwasserstoff, wie etwa Methylchlorid, Methylenchlorid, Dichlorethylen, Trichlorethan und Trichlorethylen; oder Azodicarbonamid, Dinitrosopentamethylentetramin, Azibisisobutyronitril, ein Toluolsulfonylhydrazid-Derivat oder aromatisches Succinylhydrazid.

## Revendications

1. Procédé pour procurer une voie de passage dans un bandage pneumatique, le procédé comprenant le fait de :
procurer un filament (58) enrobé d'une matière d'enrobage (92), la matière d'enrobage (92) comprenant au moins un élastomère à base diénique et une matière qui contient un liquide ou un produit solide capable de générer un gaz par vaporisation, par décomposition ou via une réaction chimique dans des conditions de chauffage ;
encastrer le filament enrobé (104) dans un confinement au sein d'un composant de bandage pneumatique flexible non vulcanisé ou prévulcanisé (70) ;
confectionner un bandage pneumatique cru à partir de composants de bandage pneumatique englobant le composant de bandage pneumatique flexible non vulcanisé ou prévulcanisé (70) et le filament enrobé encastré (104) ;
vulcaniser le bandage pneumatique cru englobant le composant de bandage pneumatique flexible (70) contenant le filament enrobé encastré (104) ; et
retirer le filament (58) du composant de bandage pneumatique flexible vulcanisé pour laisser subsister au sein du composant de bandage pneumatique flexible une voie de passage pour l'air (80) essentiellement non entravée.

2. Procédé selon la revendication 1, dans lequel la matière qui contient un liquide ou un produit solide est une résine thermoplastique ou bien représente ou comprend des particules de résine thermoplastique expansibles dans des conditions de chaleur, la résine thermoplastique ou les particules de résine thermoplastique expansibles dans des conditions de chaleur contenant ledit liquide ou ledit produit solide capable de générer un gaz par vaporisation, par décomposition ou via une réaction chimique dans des conditions de chauffage.

3. Procédé selon la revendication 1 ou 2, dans lequel le composant de bandage pneumatique flexible non vulcanisé ou prévulcanisé (70) est un composant sous la forme d'une carcasse de bandage pneumatique, un composant sous la forme d'un flanc de bandage pneumatique, un composant sous la forme d'une bande de roulement de bandage pneumatique, un composant sous la forme d'une bandelette talon de bandage pneumatique ou un composant sous la forme d'un bourrage sur tringle d'un bandage pneumatique.

4. Procédé selon au moins une des revendications précédentes, dans lequel le filament enrobé (104) s'étend entre une cavité d'entrée pour l'air et une cavité de sortie pour l'air dans le composant de bandage pneumatique flexible non vulcanisé ou prévulcanisé (70).

5. Procédé selon au moins une des revendications précédentes, comprenant en outre le fait de retirer le filament (58) en direction axiale à partir du composant de bandage pneumatique flexible vulcanisé en exerçant une traction sur l'extrémité libre du filament (58).

6. Procédé selon au moins une des revendications précédentes, comprenant en outre le fait d'insérer un assemblage temporaire d'entrée pour l'air dans une cavité d'entrée pour l'air avant la vulcanisation du bandage pneumatique cru et/ou le fait d'insérer un assemblage temporaire de sortie pour l'air dans une cavité de sortie pour l'air avant la vulcanisation du bandage pneumatique cru ; et le fait de retirer l'assemblage temporaire d'entrée pour l'air et/ou l'assemblage temporaire de sortie pour l'air après la vulcanisation du bandage pneumatique cru.

7. Procédé selon la revendication 6, dans lequel l'assemblage temporaire d'entrée pour l'air est un assemblage temporaire prévulcanisé d'entrée pour l'air et l'assemblage temporaire de sortie pour l'air est un assemblage temporaire prévulcanisé de sortie pour l'air.

8. Procédé selon la revendication 6 ou 7, comprenant en outre le fait d'étendre l'assemblage de sortie pour l'air à travers un flanc de bandage pneumatique mis en communication avec une cavité du bandage pneumatique.

9. Procédé selon la revendication 6, 7 ou 8, comprenant en outre le fait d'étendre l'assemblage de sortie pour l'air à travers un flanc de bandage pneumatique mis en communication par écoulement entre la voie de passage non entravée pour l'air et une cavité du bandage pneumatique.

10. Procédé selon au moins une des revendications précédentes, comprenant en outre le fait de :
encastrer le filament enrobé dans un confinement avec le composant de bandage pneumatique flexible non vulcanisé ou prévulcanisé :
en formant un canal dans le composant de bandage pneumatique flexible non vulcanisé ou prévulcanisé, défini par des parois latérales de canal et par une paroi inférieure de canal ;
en insérant le filament enrobé (104) dans le canal ; et
en affaissant la paroi latérale flexible du canal par-dessus le filament enrobé (104).

11. Procédé selon la revendication 10, dans lequel on forme un canal dans le composant de bandage pneumatique flexible non vulcanisé ou prévulcanisé par extrusion du composant de bandage pneumatique flexible non vulcanisé dans lequel est formé le canal.

12. Filament enrobé comprenant un filament (58) et une matière d'enrobage (92) enrobant le filament (58), la matière d'enrobage (92) comprenant au moins un élastomère à base diénique et une matière qui contient un liquide ou un produit solide capable de générer un gaz par vaporisation, par décomposition ou via une réaction chimique dans des conditions de chauffage, **caractérisé en ce que** : (i) la matière qui contient un liquide ou un produit solide est une résine thermoplastique ou bien représente ou comprend des particules de résine thermoplastique expansibles dans des conditions de chaleur, la résine thermoplastique ou les particules de résine thermoplastique expansibles dans des conditions de chaleur contenant ledit liquide ou ledit produit solide capable de générer un gaz par vaporisation, par décomposition ou via une réaction chimique dans des conditions de chauffage ; ou **en ce que** (ii) le filament est un filament de polyamide, un filament de polyester et/ou un filament d'alcool polyvinylique ; et/ou dans lequel la matière ou les particules de résine thermoplastique expansibles dans des conditions de chaleur représentent des particules de polymère ou de copolymère de (méth)acrylonitrile possédant de préférence une teneur élevée en (méth)acrylonitrile ; ou **en ce que** (iii) le liquide ou le produit solide capable de générer un gaz par vaporisation, par décomposition ou via une réaction chimique dans des conditions de chauffage est un hydrocarbure tel que le pentane, l'isopentane, le néopentane, le butane, l'isobutane, l'hexane et l'éther de pétrole ; un hydrocarbure chloré tel que le chlorure de méthyle, le chlorure de méthylène, le dichloréthylène, le trichloréthane et le trichloréthylène ; ou l'azodicarboxamide, la dinitrosopentaméthylènetétramine, un dérivé de toluènesulfonylhydrazide ou un succinylhydrazide aromatique.
